# EUROPEAN PATENT SPECIFICATION

(11) **EP 2 521 374 B1**
(45) Date of publication and mention of the grant of the patent: **27.04.2016**
(21) Application number: 12166205.0
(22) Date of filing: 30.04.2012
(51) Int. Cl.: H04N 21/45, H04N 21/478, H04N 21/4363, H04N 21/41, H04N 21/431, H04N 21/441

(54) **Image display apparatus and methods for operating the same**
Bildanzeigevorrichtung und Verfahren zu deren Betrieb
Appareil d'affichage d'images et procédés de fonctionnement associés

(30) Priority: 03.05.2011 US 201161481920 P; 19.07.2011 KR 20110071472; 16.08.2011 KR 20110081323
(43) Date of publication of application: 07.11.2012
(73) Proprietor: LG Electronics Inc., Yeongdeungpo-gu Seoul 150-721 (KR)
(72) Inventor: Kim, Jongcheol, 137-724 Seoul (KR); Matte, Fairoz, 560 071 Bangalore (IN); Kim, Kyungjin, 137-724 Seoul (KR); Kim, Hyunjung, 137-724 Seoul (KR); Park, Sungjong, 137-724 Seoul (KR); Yeo, Junhee, 137-724 Seoul (KR); Lee, Eunji, 137-724 Seoul (KR); Cho, Jaehoon, 137-724 Seoul (KR); Kumar Singapati, Praveen, 560 071 Bangalore (IN); Kumar, Saravana, 560 071 Bangalore (IN)
(74) Representative: Cabinet Plasseraud

(56) References cited:
- EP-A1- 1 686 503
- EP-A1- 2 226 721
- EP-A1- 2 315 429
- EP-A2- 1 530 115
- WO-A1-2009/038596
- WO-A1-2011/037761
- US-A1- 2004 004 630
- US-A1- 2008 077 965
- US-A1- 2008 109 843

## Description

### BACKGROUND OF THE INVENTION

### 1. Field of the invention

The present invention relates to an image display apparatus, a portable terminal, and methods for operating the same, and more particularly, to methods for operating an image display apparatus and a portable terminal, which can increase user convenience.

### 2. Description of the Related Art

An electronic device processes an electrical signal and operates based on the processed electrical signal, according to a user's manipulation. Among electronic devices, an image display apparatus has a function of displaying images to a user. The image display apparatus can display a broadcast program selected by the user on a display from among broadcast programs transmitted from broadcasting stations, as disclosed in EP2315429, US2004004630, US2009038596, US2008077965, EP1686503 or US2008109843. The recent trend in broadcasting is a worldwide shift from analog broadcasting to digital broadcasting.

As it transmits digital audio and video signals, digital broadcasting offers many advantages over analog broadcasting, such as robustness against noise, less data loss, ease of error correction, and the ability to provide high-definition, clear images. Digital broadcasting also allows interactive viewer services, compared to analog broadcasting.

### SUMMARY OF THE INVENTION

Therefore, the present invention has been made in view of the above problems, and it is an object of the present invention to provide methods for operating an image display apparatus and a portable terminal, which can increase user convenience.

It is another object of the present invention to provide a remote controller for providing an image display apparatus for performing a login, upon receipt of a login input from a remote controller or a portable terminal, and a method for operating the same.

In accordance with an aspect of the present invention, the above and other objects can be accomplished by the provision of a method for operating an image display apparatus as defined in claim 1. Embodiments of the apparatus are further defined in claims 2-8

In accordance with a further aspect of the present invention, there is provided an image display apparatus as defined in claim 9 Embodiments of the apparatus are further defined in claims 10-11

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates a remote controller according to an embodiment of the present invention and exemplary electronic devices capable of short-range communication with the remote controller;
FIG. 2 is a block diagram of an image display apparatus according to an embodiment of the present invention;
FIG. 3 is a block diagram of a controller illustrated in FIG. 2;
FIG. 4 illustrates a method for controlling the remote controller illustrated in FIG. 2;
FIG. 5A is a perspective view of the remote controller according to an embodiment of the present invention;
FIG. 5B is a block diagram of the remote controller according to an embodiment of the present invention;
FIG. 6 is a block diagram of a portable terminal and the remote controller, referred to for describing Near Field Communication (NFC) communication between them according to an embodiment of the present invention;
FIG. 7 is a flowchart illustrating a method for operating the image display apparatus according to an embodiment of the present invention;
FIG. 8 is a flowchart illustrating a method for operating the portable terminal according to an embodiment of the present invention;
FIGS. 9A to 12 are views referred to for describing various examples of the method for operating the image display apparatus illustrated in FIG. 7 and the method for operating the portable terminal apparatus illustrated in FIG. 8;
FIG. 13 is a flowchart illustrating a method for operating the image display apparatus according to another embodiment of the present invention;
FIGS. 14 and 15 are views referred to for describing an example of the method for operating the image display apparatus illustrated in FIG. 13;
FIG. 16A is a block diagram of a portable terminal according to an embodiment of the present invention;
FIG. 16B illustrates exemplary portable terminals according to an embodiment of the present invention; and
FIGS. 17 to 31 are views referred to for describing various examples of a method for operating the portable terminal and a method for operating the image display apparatus according to embodiments of the present invention

### DETAILED DESCRIPTION OF THE PREFERRED EMBODIMENTS

Embodiments of the present invention will be described below with reference to the attached drawings.

The terms "module" and "unit" used to signify components are used herein to help the understanding of the components and thus they should not be considered as having specific meanings or roles. Accordingly, the terms "module" and "unit" may be used interchangeably.

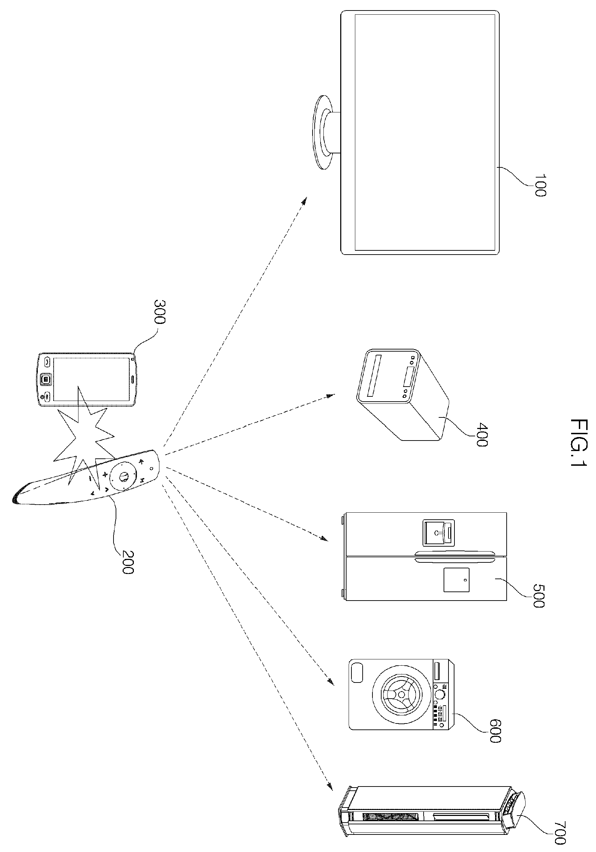

FIG. 1 illustrates a remote controller according to an embodiment of the present invention and exemplary electronic devices capable of short-range communication with the remote controller.

Referring to FIG. 1, a remote controller 200 according to an embodiment of the present invention may transmit data to or receive data from an electronic device by short-range communication, particularly Near Field Communication (NFC).

NFC is a contactless short-range wireless communication technology that provides wireless connectivity at a frequency of 13.56MHz. NFC is mutually compatible with existing contactless smart cards and Radio Frequency Identification (RFID).

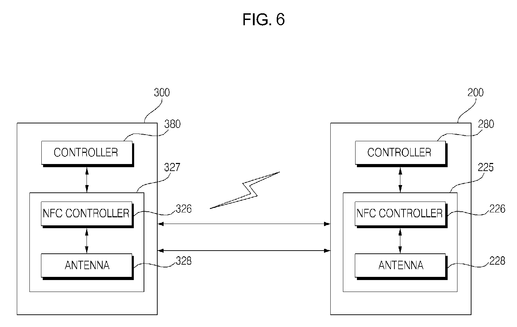

To conduct NFC communication, the remote controller 200 includes an NFC module according to the embodiment of the present invention. The NFC module will be described later with reference to FIG. 6.

To enable NFC communication with the remote controller 200, a portable terminal 300 also includes an NFC module.

For example, if the portable terminal 300 is brought within a predetermined distance to the remote controller 200 (i.e. tagging) and thus NFC communication is conducted between them, the portable terminal 300 or the remote controller 200 may create a magnetic field towards the remote controller 200 or the portable terminal 300 and thus the remote controller 200 may receive personal information from the portable terminal 300 according to a variation in the magnetic field.

Herein, the personal information may include login information needed for a user account.

The remote controller 200 may transmit the received personal information to other electronic devices in a transmission scheme other than NFC, for example, InfraRed (IR) communication, Radio Frequency (RF) communication, etc.

The electronic devices are shown in FIG. 1 as an image display apparatus 100, a Network Access Storage (NAS) 400, a refrigerator 500, a washing machine 600, and an air conditioner 700, by way of example. Besides, the electronic devices may include a cooker, a home theater, a camera, a game console, etc.

The image display apparatus 100 may be any of a TV capable of displaying a broadcast program, a monitor, a laptop computer, a tablet PC, etc.

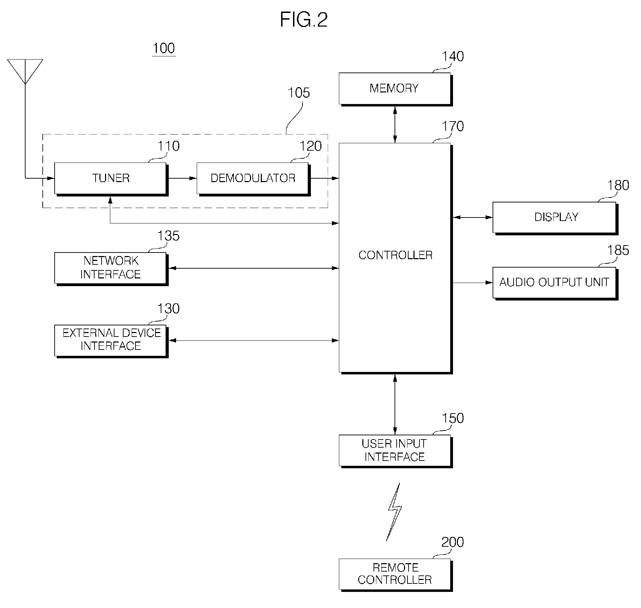

FIG. 2 is a block diagram of an image display apparatus according to an embodiment of the present invention.

Referring to FIG. 2, the image display apparatus 100 according to the embodiment of the present invention includes a broadcasting receiver 105, an external device interface 130, a network interface 135, a memory 140, a user input interface 150, a sensor unit (not shown), a controller 170, a display 180, and an audio output unit 185.

The broadcasting receiver 105 may include a tuner unit 110 and a demodulator 120. As needed, the broadcasting receiver 105 may be configured so as to include only the tuner unit 110 and the demodulator 120 or only the network interface 135.

The tuner unit 110 selects an RF broadcast signal corresponding to a channel selected by a user or an RF broadcast signal corresponding to each of pre-stored channels from among a plurality of RF broadcast signals received through an antenna and downconverts the selected RF broadcast signal into a digital Intermediate Frequency (IF) signal or an analog baseband Audio/Video (A/V) signal.

More specifically, if the selected RF broadcast signal is a digital broadcast signal, the tuner unit 110 downconverts the selected RF broadcast signal into a digital IF signal, DIF. On the other hand, if the selected RF broadcast signal is an analog broadcast signal, the tuner unit 110 downconverts the selected RF broadcast signal into an analog baseband A/V signal, CVBS/SIF. That is, the tuner unit 110 may be a hybrid tuner capable of processing not only digital broadcast signals but also analog broadcast signals. The analog baseband A/V signal CVBS/SIF may be directly input to the controller 170.

The tuner unit 110 may be capable of receiving RF broadcast signals from an Advanced Television Systems Committee (ATSC) single-carrier system or from a Digital Video Broadcasting (DVB) multi-carrier system

The tuner unit 110 may sequentially select a number of RF broadcast signals corresponding to all broadcast channels previously stored in the image display apparatus 100 by a channel add function from a plurality of RF signals received through the antenna and may downconvert the selected RF broadcast signals into IF signals or baseband A/V signals.

The tuner unit 110 may include a plurality of tuners for receiving broadcast signals on a plurality of channels. Alternatively, the tuner unit 110 may be implemented into a single tuner for simultaneously receiving broadcast signals on a plurality of channels.

The demodulator 120 receives the digital IF signal DIF from the tuner unit 110 and demodulates the digital IF signal DIF.

The demodulator 120 may perform demodulation and channel decoding on the digital IF signal DIF, thereby obtaining a stream signal TS. The stream signal TS may be a signal in which a video signal, an audio signal and a data signal are multiplexed.

The stream signal TS may be input to the controller 170 and thus subjected to demultiplexing and A/V signal processing. The processed video and audio signals are output to the display 180 and the audio output unit 185, respectively.

The external device interface 130 may serve as an interface between a connected external device and the image display apparatus 100. For interfacing, the external device interface 130 may include an A/V Input/Output (I/O) unit (not shown) and/or a wireless communication module (not shown).

The external device interface 130 may be connected to an external device such as a Digital Versatile Disk (DVD) player, a Blu-ray player, a game console, a camera, a camcorder, a computer (e.g., a laptop computer), or a set-top box, wirelessly or by wire. Then, the external device interface 130 transmits and receives signals to and from the external device.

The A/V I/O unit of the external device interface 130 may receive video, audio, and/or data signals from the external device. The wireless communication module of the external device interface 130 may perform short-range wireless communication with other electronic devices.

The network interface 135 serves as an interface between the image display apparatus 100 and a wired/wireless network such as the Internet. The network interface 135 may receive content or data from the Internet, a Content Provider (CP), or a Network Provider (NP).

The network interface 135 may conduct data communication with electronic devices near to the image display apparatus 100. The network interface 135 may receive device information and remote controllable channel, frequency, or code information about other electronic devices through data communication.

The memory 140 may store various programs necessary for the controller 170 to process and control signals, and may also store processed video, audio and data signals.

The memory 140 may temporarily store a video, audio and/or data signal received from the external device interface 130. The memory 140 may store information about broadcast channels by the channel add function such as a channel map.

While the memory 140 is shown in FIG. 2 as configured separately from the controller 170, to which the present invention is not limited, the memory 140 may be incorporated into the controller 170, for example.

The user input interface 150 transmits a signal received from a user to the controller 170 or transmits a signal received from the controller 170 to the user.

For example, the user input interface 150 may receive various user input signals such as a power-on/off signal, a channel selection signal, and a screen setting signal from the remote controller 200, provide the controller 170 with user input signals received from local keys (not shown), such as inputs of a power key, a channel key, and a volume key, and a setting value, transmit a control signal received from the sensor unit (not shown) for sensing a user gesture to the controller 170, or transmit a signal received from the controller 170 to the sensor unit.

In accordance with an embodiment of the present invention, the user input interface 150 may receive personal information from the remote controller 200. In addition to the personal information, the user input interface 150 may receive information about a Web server which has been connected to an adjacent electronic device based on the personal information

For example, if the portable terminal 300 and the remote controller 200 are brought within a predetermined distance and thus communicate by NFC, the remote controller 200 may receive from the portable terminal 300 personal information stored in the portable terminal 300 and then transmit the personal information to the image display apparatus 100 in a transmission scheme other than NFC communication, for example, by IR or RF communication. The user input interface 150 transmits the received personal information to the controller 170.

The personal information may include information about a user IDentifier (ID), password, and e-mail address required to use the portable terminal 300, information about a user ID, password, and e-mail address required to use the image display apparatus 100, information about a common user ID or password for a plurality of electronic devices including the portable terminal 300, information about a user ID and a password that are pre-stored in the portable terminal 300 to access a specific Web server, information about a user ID and a password required to access a specific Web server in the portable terminal 300 and the image display apparatus 100, or information about a user ID and a password required to access a server connected to the image display apparatus 100.

That is, the personal information may be information required to log in to an electronic device or a service through a specific account.

The user input interface 150 may receive device information and remote controllable channel, frequency, or code information about external devices near to the image display apparatus 100 from the remote controller 200.

The controller 170 may demultiplex the stream signal TS received from the tuner unit 110, the demodulator 120, or the external device interface 130 into a number of signals and process the demultiplexed signals into audio and video data

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. Also, the audio signal processed by the controller 170 may be transmitted to the external output device through the external device interface 130.

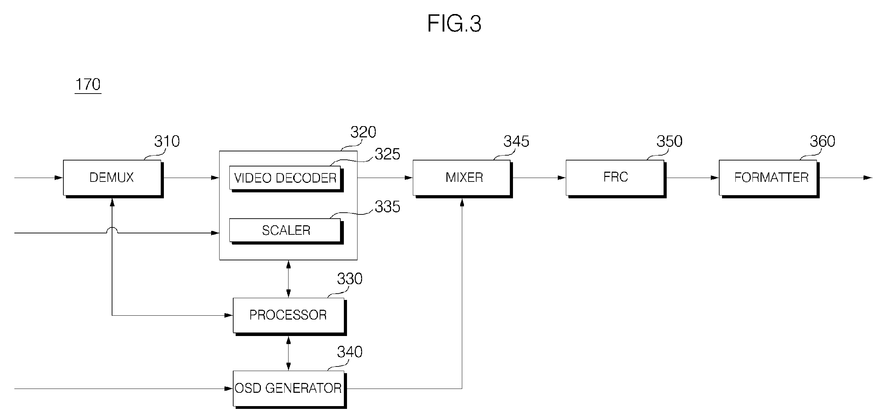

While not shown in FIG. 2, the controller 170 may include a demultiplexer (DEMUX) and a video processor, which will be described later with reference to FIG. 3.

In addition, the controller 170 may provide overall control to the image display apparatus 100. For example, the controller 170 may control the tuner unit 110 to select an RF broadcast signal corresponding to a user-selected channel or a pre-stored channel.

The controller 170 may control the image display apparatus 100 according to a user command received through the user input interface 150 or according to an internal program.

The controller 170 may also control the display 180 to display images. The image displayed on the display 180 may be a two-dimensional (2D) or three-dimensional (3D) still image or video.

The controller 170 may control 3D rendering of a particular object in the image displayed on the display 180. For example, the particular object may be at least one of a linked Web page (e.g. from a newspaper, a magazine, etc.), an Electronic Program Guide (EPG), a menu, a widget, an icon, a still image, a video, or text.

The controller 170 may locate the user based on an image captured by a camera unit (not shown). Specifically, the controller 170 may measure the distance (a z-axis coordinate) between the user and the image display apparatus 100. In addition, the controller 170 may calculate x-axis and y-axis coordinates corresponding to the position of the user on the display 180.

In accordance with an embodiment of the present invention, the controller 170 may control a login based on the personal information received from the remote controller 200. The login may be a login to the image display apparatus 100, a login to a server connected to the image display apparatus 100, or a login to a specific Web server to which the user subscribed using the personal information.

In case of a login to the image display apparatus 100 using a user ID and a password received from the remote controller 200, the controller 170 may control display of a personalized page set per user account on the display 180. If an image is being played, the controller 170 may control display of the personalized page along with the on-going image. Or the on-going image may be switched to the personalized page.

In case of a login to a server connected to the image display apparatus 100, the controller 170 may control display of a server connection page received from the server on the display 180. Specifically, the server connection page may be an app server page. If an image is being played, the controller 170 may control display of the server connection page along with the on-going image. Or the on-going image may be switched to the server connection page.

In the case where the received personal information is associated with a Web server connected to another electronic device, particularly the portable terminal 300, the controller 170 may control the image display apparatus 100 to access the Web server and may control display of a Web page from the accessed Web server on the display 180. The Web server may be a Social Networking Service (SNS) Web server. If an image is being played, the controller 170 may control display of the Web page along with the on-going image. Or the on-going image may be switched to the Web page.

Upon receipt of the personal information in a power-off state of the image display apparatus 100, the controller 170 may control a power supply (not shown) to supply power to the image display apparatus 100. That is, if the personal information is received through the user input interface 150 in idle mode, the controller 170 may transition to wake-up mode and may control the power supply to supply power to each module or unit of the image display apparatus 100.

Meanwhile, the controller 170 may determine using the personal information from the remote controller 200 whether each of electronic devices near to the image display apparatus 100 has been connected, based on device information and remote controllable channel, frequency or code information about the nearby electronic devices, received through the network interface 135 or the user input interface 150. In the presence of any connected nearby electronic device, the controller 170 may control display of an object indicating the logged-in electronic device on the display 180.

Additionally, the controller 170 may control transmission of device information and remote controllable channel, frequency or code information about an electronic device near to the image display apparatus 100 to the remote controller 200 based on the device information and remote controllable channel, frequency or code information about the nearby electronic devices around the image display apparatus 100.

The image display apparatus 100 may further include a channel browsing processor (not shown) for generating thumbnail images corresponding to channel signals or external input signals. The channel browsing processor may extract some of the video frames of each of stream signals TS received from the demodulator 120 or stream signals received from the external device interface 130 and display the extracted video frames on the display 180 as thumbnail images. The thumbnail images may be output to the controller 170 after they are encoded together with a decoded image. The controller 170 may display a thumbnail list including a plurality of received thumbnail images on the display 180.

The thumbnail list may be displayed on a part of the display 180 with an image displayed on the display 180, that is, as a compact view, or the thumbnail list may be displayed in full screen on the display 180. The thumbnail images of the thumbnail list may be updated sequentially.

The display 180 generates drive signals by converting a processed video signal, a processed data signal, an On Screen Display (OSD) signal, and a control signal received from the controller 170 or a video signal, a data signal, and a control signal received from the external device interface 130.

The display 180 may be various types of displays such as a Plasma Display Panel (PDP), a Liquid Crystal Display (LCD), an Organic Light Emitting Diode (OLED) display, and a flexible display. The display 180 may also be capable of displaying 3D images.

The display 180 may also be a touch screen that can be used not only as an output device but also as an input device.

The audio output unit 185 may receive a processed audio signal from the controller 170 and output the received audio signal as voice.

The camera module (not shown) captures an image of a user. The camera module may include, but not limited to, a single camera When needed, the camera module may include a plurality of cameras. The camera module may be embedded above the display 180 in the image display apparatus 100, or may be separately configured. Image information captured by the camera module may be provided to the controller 170.

The controller 170 may sense a user's gesture from a captured image received from the camera module or from signals received from the sensor unit (not shown), alone or in combination.

The remote controller 200 transmits a user input to the user input interface 150. For transmission of a user input, the remote controller 200 may operate based on various communication standards such as Bluetooth, RF, IR, Ultra WideBand (UWB), ZigBee, and NFC.

In addition, the remote controller 200 may receive a video signal, audio signal and/or data signal from the user input interface 150 and output the received signal as an image or sound.

In accordance with an embodiment of the present invention, the remote controller 200 may receive personal information from a specific electronic device by NFC. As described before, the personal information may include a user ID and a password with which to use the portable terminal 300, the image display apparatus 100, or other electronic devices. Although personal information may be different for each device, the following description is given on the assumption of one universal user ID and password.

The remote controller 200 may transmit the received personal information to the image display apparatus 100 by IR or RF communication.

A description is given of embodiments of the present invention with the appreciation that the remote controller 200 is a pointing device capable of displaying a pointer in correspondence with a user's motion That is, the remote controller 200 may transmit personal information to the image display apparatus 100 by RF communication.

Besides the personal information, the remote controller 100 may receive information about a Web server connected based on the personal information. For instance, the remote controller 200 may receive information about an SNS Web server to which the portable terminal 300 is logging in. The Web server information is also transmitted to the image display apparatus 100.

Meanwhile, the remote controller 200 may receive device information and remote controllable channel, frequency information or code information about other electronic devices near to the image display apparatus 100 from the other electronic devices. Thus, for remote control, the remote controller 200 may assign a channel, frequency or code to an electronic device based on the information about the electronic device, for remote control of the electronic device.

The above-described image display apparatus 100 may be a fixed or mobile digital broadcast receiver.

The block diagram of the image display apparatus 100 illustrated in FIG. 2 is an exemplary embodiment of the present invention. The image display apparatus 100 is shown in FIG. 2 as having a number of components in a given configuration. However, the image display apparatus 100 may include fewer components or more components than those shown in FIG. 1 in alternative embodiments. Also, two or more components of the image display apparatus 100 may be combined into a single component or a single component thereof may be separated into two more components in alternative embodiments. The functions of the components of the image display apparatus 100 as set forth herein are illustrative in nature and may be modified, for example, to meet the requirements of a given application.

Unlike the configuration illustrated in FIG. 2, the image display apparatus 100 may be configured so as to receive and playback video content through the network interface 135 or the external device interface 135, without the tuner unit 100 and the demodulator 120.

FIG. 3 is a block diagram of the controller illustrated in FIG. 2.

Referring to FIG. 3, the controller 170 may include a DEMUX 310, a video processor 320, a processor 330, an OSD generator 340, a mixer 345, a Frame Rate Converter (FRC) 350, and a formatter 360 according to an embodiment of the present invention. The controller 170 may further include an audio processor (not shown) and a data processor (not shown).

The DEMUX 310 demultiplexes an input stream. For example, the DEMUX 310 may demultiplex an MPEG-2 TS into a video signal, an audio signal, and a data signal. The input stream signal may be received from the tuner unit 110, the demodulator 120 or the external device interface 135.

The video processor 320 may process the demultiplexed video signal. For video signal processing, the video processor 320 may include a video decoder 325 and a scaler 335.

The video decoder 325 decodes the demultiplexed video signal and the scaler 335 scales the resolution of the decoded video signal so that the video signal can be displayed on the display 180.

The video decoder 325 may be provided with decoders that operate based on various standards.

The processor 330 may provide overall control to the image display apparatus 100 or the controller 170. For example, the processor 330 may control the tuner unit 110 to tune to RF broadcasting corresponding to a user-selected channel or a pre-stored channel.

The processor 330 may also control the image display apparatus 100 according to a user command received through the user input interface 150 or an internal program

The processor 330 may control data transmission through the network interface 135 or the external device interface 130.

The processor 330 may control operations of the DEMUX 310, the video processor 320, and the OSD generator 340 in the controller 170.

The OSD generator 340 generates an OSD signal autonomously or according to a user input. For example, the OSD generator 340 may generate signals by which information is displayed as graphics or text on the display 180, according to user input signals. The OSD signal may include various data such as a User Interface (UI), a variety of menus, widgets, icons, etc. Also, the OSD signal may include a 2D object and/or a 3D object.

Further, the OSD generator 340 may generate a pointer to be displayed on the display 180 based on a pointing signal received from the remote controller 200. Especially, the pointer may be generated from a pointing signal processor (not shown), which may reside in the OSD generator 240. Obviously, the pointing signal processor may be configured separately from the OSD generator 240.

In case of a login to the image display apparatus 100, the OSD generator 340 may generate or configure a personalized page which has been set. In case of a login to a connected server, the OSD generator 340 may generate or configure at least a part of a server connection page received from the server on the display 180. Or the OSD generator 340 may generate or configure at least a part of the server connection page based on information about a Web server that has been connected based on the personal information.

The mixer 345 may mix the decoded video signal processed by the video processor 320 with the OSD signal generated from the OSD generator 340. The OSD signal and the decoded video signal each may include at least one of a 2D signal or a 3D signal. The mixed video signal is provided to the FRC 350.

The FRC 350 may change the frame rate of the mixed video signal or may simply output the mixed video signal without frame rate conversion.

The formatter 360 may receive the mixed signal, namely the OSD signal and the decoded video signal in combination form the mixer 345, change the format of the mixed signal suitably for the display 180, and output the format-changed signal. For example, the formatter 360 may output a Red, Green and Blue (R.G.B) data signal. The RG.B data signal may take the form of a Low Voltage Differential Signal (LVDS) or mini-LVDS.

For 3D visualization, the formatter 360 may separate a 2D video signal and a 3D video signal from the mixed video signal received from the mixer 345. In addition, the formatter 360 may change the format of a 3D video signal or convert a 2D video signal to a 3D video signal.

The audio processor (not shown) of the controller 170 may process the demultiplexed audio signal. For audio signal processing, the audio processor may have a plurality of decoders.

The audio processor of the controller 170 may also adjust the bass, treble, and volume of the audio signal.

The data processor (not shown) of the controller 170 may process the data signal obtained by demultiplexing the input stream signal. For example, if the demultiplexed data signal is a coded data signal, the data processor may decode the coded data signal. The coded data signal may be an EPG which includes broadcast information specifying the start time, end time, etc. of scheduled broadcast TV or radio programs

While it is shown in FIG. 3 that the mixer 345 mixes signals received from the OSD generator 340 and the video processor 320 and then the formatter 360 performs 3D processing on the mixed signal, to which the present invention is not limited, the mixer 345 may be positioned after the formatter 360.

The block diagram of the image display apparatus 100 illustrated in FIG. 3 is purely exemplary. Depending upon the specifications of the image display apparatus 100 in actual implementation, the components of the image display apparatus 100 may be combined or omitted or new components may be added. That is, two or more components are incorporated into one component or one component may be configured as separate components, as needed.

Especially, the FRC 350 and the formatter 360 may be configured separately outside the controller 170.

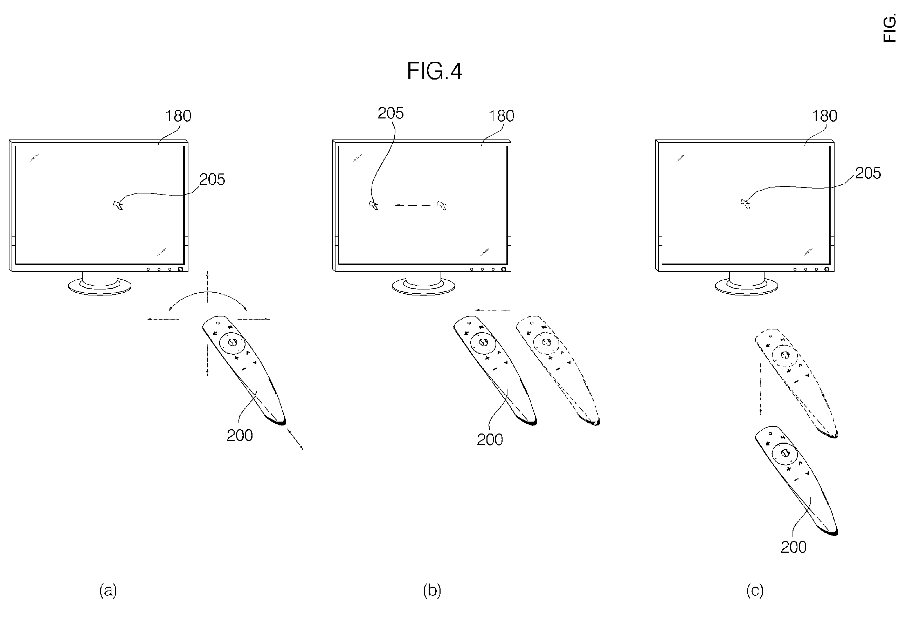

FIG. 4 illustrates a method for controlling the remote controller illustrated in FIG. 1.

FIG. 4(a) illustrates a pointer 205 representing movement of the remote controller 200 displayed on the display 180.

The user may move or rotate the remote controller 200 up and down, side to side (FIG. 4(b)), and back and forth (FIG. 4(c)). Since the pointer 205 moves in accordance with the movement of the remote controller 200 in 3D space, the remote controller 200 may be referred to as a pointing device.

Referring to FIG. 4(b), if the user moves the remote controller 200 to the left, the pointer 205 also moves to the left on the display 180.

A sensor of the remote controller 200 detects the movement of the remote controller 200 and transmits motion information corresponding to the result of the detection to the image display apparatus 100. Then, the image display apparatus 100 determines the movement of the remote controller 200 based on the motion information received from the remote controller 200, and calculates the coordinates of a target point to which the pointer 205 should be shifted in accordance with the movement of the remote controller 200 based on the result of the determination. The image display apparatus 100 then displays the pointer 205 at the calculated coordinates.

Referring to FIG. 4(c), while pressing a predetermined button of the remote controller 200, the user moves the remote controller 200 away from the display 180. Then, a selected area corresponding to the pointer 205 may be zoomed in and enlarged on the display 180. On the contrary, if the user moves the remote controller 200 toward the display 180, the selection area corresponding to the pointer 205 is zoomed out and thus contracted on the display 180. The opposite case is also possible. That is, when the remote controller 200 recedes from the display 180, the selection area may be zoomed out and when the remote controller 200 approaches the display 180, the selection area may be zoomed in.

With the predetermined button pressed on the remote controller 200, the up, down, left and right movements of the remote controller 200 may be ignored. That is, when the remote controller 200 recedes from or advances toward the display 180, only the back and forth movements of the remote controller 200 may be sensed, while the up, down, left and right movements of the remote controller 200 may be ignored. Unless the predetermined button is pressed in the remote controller 200, the pointer 205 may move in accordance with the up, down, left or right movement of the remote controller 200.

The speed and direction of the pointer 205 may correspond to the speed and direction of the remote controller 200.

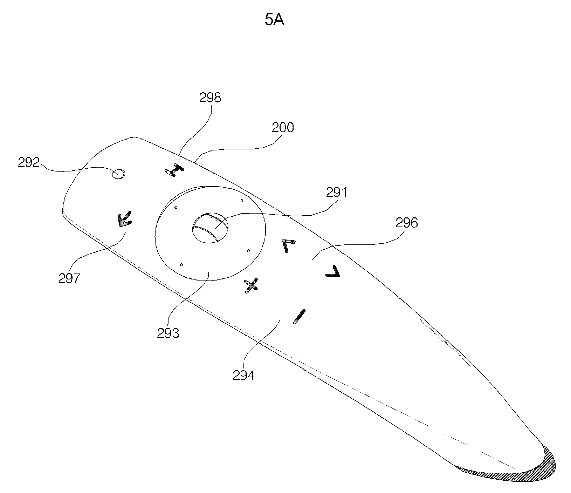

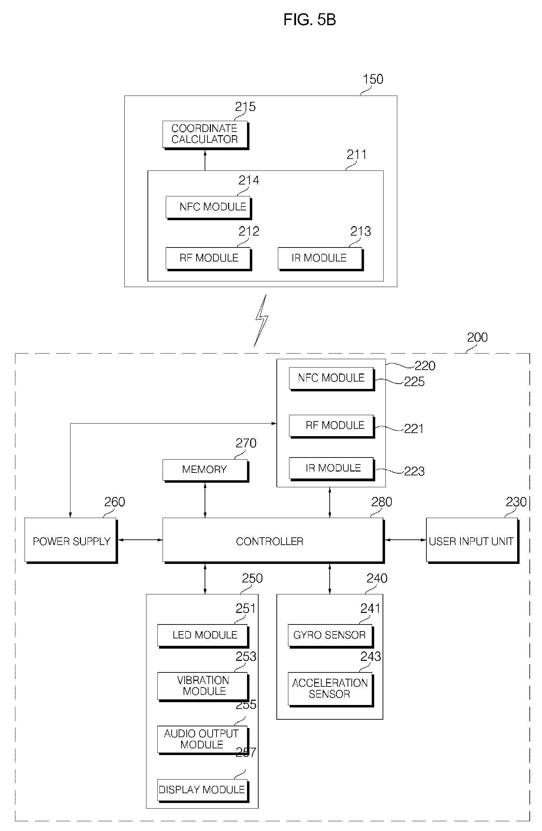

FIG. 5A is a perspective view of the remote controller, particularly a pointing device according to an embodiment of the present invention and FIG. 5B is a block diagram of the remote controller.

Referring to FIG. 5A, the pointing device may include a plurality of input keys or buttons.

For example, the pointing device may include an OK key 291, a Menu key 292, a 4-directional key 293, a Channel key 294, and a Volume key 296.

For example, the OK key 291 may be used to select a menu or an item. The Menu key 292 may be used to display a specific menu and the 4-directional key 293 may be used to move a pointer or an indicator up, down, to the left, or to the right. With the Channel key 294, a user may increase or decrease a channel number. The Volume key 296 may be used to increase or decrease sound volume.

The pointing device may further include a Back key 297 and a Home key 298. For example, a previous screen may appear by pressing the Back key 297. The Home key 298 may take the user to a home screen

As illustrated in FIG. 5A, the OK key 291 may be equipped with a scroll function. Thus, the OK key 291 may be configured into a wheel key. When the OK key 291 is pressed, a menu or item may be selected. If the OK key 291 is scrolled up or down, a displayed screen may be scrolled up or down or a page may be turned to a previous or next page.

Specifically, when a part of an image is displayed on the display 180 because the image is too large for the display size of the display 180, another part of the image may be displayed on the display 180 by scrolling the OK key 291. In another example, when a list page is displayed on the display 180, the list page may be turned to the previous or next page by scrolling the OK key 291.

The scroll function may be implemented by a separately procured key instead of the OK key 291.

The 4-directional key 293 may be configured into a ring with up, down, left and right keys arranged at four directional positions. For example, when a user touches from the up key to the down key, a predetermined function set for the touch input may be input or performed.

Referring to FIG. 5B, the remote controller 200 may include a wireless communication module 220, a user input unit 235, a sensor unit 240, an output unit 250, a power supply 260, a memory 270, and a controller 280.

The wireless communication module 220 transmits signals to and receives signals from the image display apparatus 100.
In the embodiment of the present invention, the interface 150 of the image display apparatus 100 may include a wireless communication module 211 for wirelessly transmitting and receiving signals to and from the remote controller 200, and a coordinate calculator 215 for calculating the coordinates of the pointer corresponding to an operation of the remote controller 200. Further, the interface 150 may transmit and receive signals wirelessly to and from the remote controller 200 through the RF module 212. The interface 150 may also receive a signal from the remote controller 200 through the IR module 213 based on the IR communication standard.

The wireless communication module 211 may further include an NFC module 214 for communicating with an electronic device by NFC.

The coordinate calculator 215 may calculate the coordinates (x, y) of the pointer to be displayed on the display 180 by correcting a handshaking or errors from a signal corresponding to an operation of the remote controller 200 received through the wireless communication module 211.

Thereafter, a signal received from the remote controller 200 through the interface 150 is provided to the controller 170 of the image display apparatus 100. The controller 170 may identify information about an operation of the remote controller 200 or a key manipulation on the remote controller 200 from the signal received from the remote controller 200 and control the image display apparatus 100 according to the identical information.

In another example, the remote controller 200 may calculate the coordinates of the pointer corresponding to the operation of the pointing device and output the coordinates to the interface 150 of the image display apparatus 100. The interface 150 of the image display apparatus 100 may then transmit the received coordinate information to the controller 170 without correcting a handshaking or errors.

In the embodiment of the present invention, the wireless communication module 220 may include an RF module 221 for transmitting RF signals to and/or receiving RF signals from the image display apparatus 100 according to an RF communication standard. The wireless communication module 220 may also include an IR module 223 for transmitting IR signals to and/or receiving IR signals from the image display apparatus 100 according to an IR communication standard.

The wireless communication module 220 may further include an NFC module 225 for communicating with an electronic device by NFC.

The remote controller 200 may transmit motion information regarding its movement to the image display apparatus 100 through the RF module 221.

The remote controller 200 may also receive signals from the image display apparatus 100 through the RF module 221. The remote controller 200 may transmit commands, such as a power on/off command, a channel switching command, or a sound volume change command, to the image display apparatus 100 through the IR module 223, as needed.

In accordance with the embodiment of the present invention, the remote controller 200 may receive personal information from a specific electronic device by NFC communication.

The remote controller 200 may transmit the received personal information to the image display apparatus 100 by IR or RF communication.

In addition to the personal information, the remote controller 200 may receive information about a Web server connected based on the personal information For example, the remote controller 200 may receive information about an SNS Web server to which the portable terminal 300 is logging in. The Web server information may also be transmitted to the image display apparatus 100.

Meanwhile, the remote controller 200 may receive, from the electronic device, remote controllable channel, frequency or code information about other electronic devices and assign a channel, frequency, or code to a specific electronic device based on the information about the specific electronic device, to remotely control the specific electronic device.

The user input unit 230 may include a keypad, a plurality of buttons, a touch pad, and/or a touch screen. The user may enter commands to the image display apparatus 100 by manipulating the user input unit 230. If the user input unit 230 includes a plurality of hard-key buttons, the user may input various commands to the image display apparatus 100 by pressing the hard-key buttons. Alternatively or additionally, if the user input unit 230 includes a touch screen displaying a plurality of soft keys, the user may input various commands to the image display apparatus 100 by touching the soft keys. The user input unit 230 may also include various input tools other than those set forth herein, such as a scroll key and/or a jog key, which should not be construed as limiting the present invention.

The sensor unit 240 may include a gyro sensor 241 and/or an acceleration sensor 243. The gyro sensor 241 may sense the movement of the remote controller 200

For example, the gyro sensor 241 may sense the movement of the remote controller 200, for example, in X-, Y-, and Z-axis directions, and the acceleration sensor 243 may sense the moving speed of the remote controller 200. The sensor unit 240 may further include a distance sensor for sensing the distance between the remote controller 200 and the display 180.

The output unit 250 may output a video and/or audio signal corresponding to a manipulation of the user input unit 230 or a signal transmitted by the image display apparatus 100. The user may easily identify whether the user input unit 230 has been manipulated or whether the image display apparatus 100 has been controlled based on the video and/or audio signal output from the output unit 250.

The output unit 250 may include a Light Emitting Diode (LED) module 251 which is turned on or off whenever the user input unit 230 is manipulated or whenever a signal is received from or transmitted to the image display apparatus 100 through the wireless communication module 220, a vibration module 253 which generates vibrations, an audio output module 255 which outputs audio data, and a display module 257 which outputs an image.

The power supply 260 supplies power to the remote controller 200. If the remote controller 200 is kept stationary for a predetermined time or longer, the power supply 260 may, for example, reduce or cut off supply of power to the remote controller 801 in order to save power. The power supply 260 may resume supply of power if a specific key on the remote controller 200 is manipulated.

The memory 270 may store various application data for controlling or operating the remote controller 200. The remote controller 200 may wirelessly transmit signals to and/or receive signals from the image display apparatus 100 in a predetermined frequency band through the RF module 221. The controller 280 of the remote controller 200 may store information regarding the frequency band used for the remote controller 200 to wirelessly transmit signals to and/or wirelessly receive signals from the paired image display apparatus 100 in the memory 270 and may then refer to this information for use at a later time.

The controller 280 provides overall control to the remote controller 200. For example, the controller 280 may transmit a signal corresponding to a key manipulation detected from the user input unit 230 or a signal corresponding to motion of the remote controller 200, as sensed by the sensor unit 240, to the image display apparatus 100 through the wireless communication module 220.

The controller 280 may control transmission of personal information received from an electronic device by NFC to the image display apparatus 100 through the wireless communication module 220. Especially, upon receipt of a specific key input from the user input unit 230, the controller 280 may control transmission of the received personal information to the image display apparatus 100 through the wireless communication module 220.

Besides, the controller 280 may control transmission of the received personal information to electronic devices other than the image display apparatus 100 through the wireless communication module 220. Herein, the controller 280 may use a different channel, frequency or code for each electronic device. Different channels, frequencies, or codes may be based on device information and remote controllable channel, frequency or code information about the electronic devices, already received from the respective electronic devices.

FIG. 6 is a block diagram of the portable terminal and the remote controller, referred to for describing NFC communication between them according to an embodiment of the present invention.

Referring to FIG. 6, the portable terminal 300 and the remote controller 200 may exchange data by NFC.

For NFC communication, the portable terminal 300 may be equipped with an NFC module 327 including an NFC controller 326 and an antenna 328 and the remote controller 200 may also be equipped with an NFC module 225 including an NFC controller 226 and an antenna 228.

For example, when the user brings the portable terminal 300 or the remote controller 200 within a predetermined distance to the remote controller 200 or the portable terminal 300, a magnetic field is created and the remote controller 200 may receive personal information from the portable terminal 300 according to a variation in the magnetic field.

There are three NFC modes, Card Emulation (CE) mode, Reader/Writer mode, or peer to peer mode. Herein, the personal information may be transmitted between the portable terminal 300 and the remote controller 200 in the Reader/Writer mode or the peer to peer mode.

While each of the NFC modules 327 and 225 is shown in FIG. 6 as an active type including an NFC controller and an antenna, by way of example, the NFC modules 327 and 225 may be a passive type including a tag-type NFC memory and antenna For example, the portable terminal 300 may include an NFC module with an antenna and an NFC memory that stores device information or personal information If NFC tagging is performed between the portable terminal 300 and the remote controller 200, the portable terminal 300 may transmit the personal information to the remote controller 200.

The following description will be given, centering on an active NFC module.

To transmit the personal information, a controller 480 of the portable terminal 300 outputs the personal information to the NFC module 327. In the NFC module 327, the NFC controller 326 converts the personal information and controls transmission of the converted personal information through the antenna 328. The personal information may be pre-stored in the controller 480 or a memory (not shown) of the portable terminal 300.

The antenna 228 of the remote controller 200 receives the personal information from the portable terminal 300 and provides the personal information to the controller 280 through the NFC controller 226. The controller 280 controls transmission of the personal information to other electronic devices including the image display apparatus 100 through the wireless communication module 220.

Besides the personal information, the remote controller 200 may further receive information about a Web server to which the portable terminal 300 or other electronic devices are logging in.

The portable terminal 300 may be a hand-held phone, a smart phone, a laptop computer, a tablet PC, etc.

When two electronic devices are conducting NFC communication through tagging, one of them may act as an NFC initiator and the other may act as an NFC target. The roles of the electronic devices may be assigned in the following rule.

First of all, a portable device operates as an NFC initiator.

If both electronic devices like the portable terminal 300 and the remote controller 200 are portable devices, an electronic device connected to a network may be an NFC initiator and the other electronic device may be an NFC target. For example, if the portable terminal 300 is connected to a network, the portable terminal 300 may act as an NFC initiator.

If both electronic devices, that is, both the portable terminal 300 and the remote controller 200 are connected to the network, an active NFC module may act as an NFC initiator and a passive NFC module may act as an NFC target. The passive NFC module takes the form of a tag, including an NFC antenna and a memory, without a controller.

In embodiments of the present invention, the portable terminal 300 may exchange data with the image display apparatus 100 by NFC.

For NFC communication, the portable terminal 300 and the image display apparatus 100 may be provided with the above-described NFC modules.

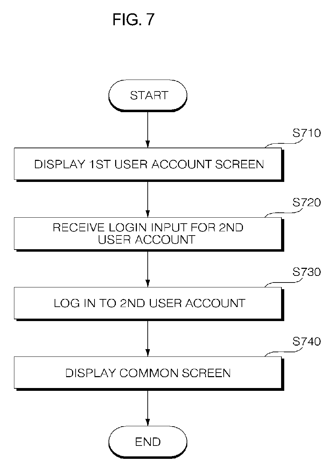

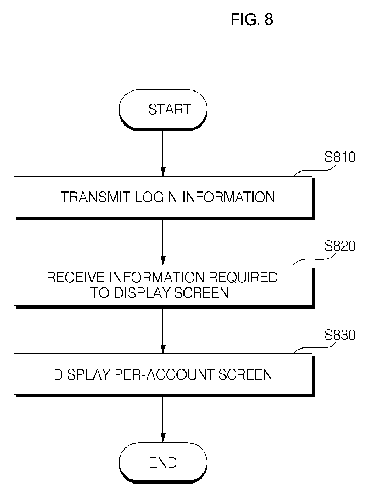

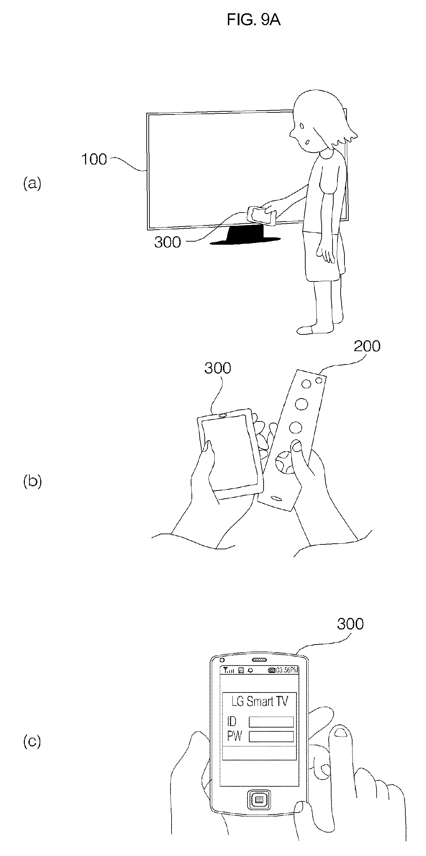

FIG. 7 is a flowchart illustrating a method for operating the image display apparatus according to an embodiment of the present invention, FIG. 8 is a flowchart illustrating a method for operating the portable terminal according to an embodiment of the present invention, and FIGS. 9A to 12 are views referred to for describing various examples of the method for operating the image display apparatus illustrated in FIG. 7 and the method for operating the portable terminal apparatus illustrated in FIG. 8.

Referring to FIG. 7, a screen based on a setting of a first user account corresponding to a first portable terminal is displayed on the display 180 (S710).

Specifically, when a user logs in to the first user account through the first portable terminal, the image display apparatus 100 displays a personalized screen for the logged-in account, that is, the first user account on the display 180.

A login input may be made in various manners.

According to the present invention, when the portable terminal is connected to the image display apparatus 100, a login to the image display apparatus may be automated using personal information preserved in the portable terminal.

FIG. 9A illustrates exemplary login inputs according to an embodiment of the present invention.

In accordance with the embodiment of the present invention, a login may be performed by transmitting or receiving login information through NFC communication between a portable terminal and an image display apparatus or between the portable terminal and a remote controller.

If the portable terminal 300 approaches the image display apparatus 100 within a predetermined distance, the image display apparatus 100 receives login information from the portable terminal 300.

Referring to (a) of FIG. 9A, when the portable terminal 300 is brought within a predetermined distance to the image display apparatus 100, the portable terminal 300 transmits login information to the image display apparatus 100 by NFC communication.

Meanwhile, if the portable terminal 300 and the remote controller 200 get close to each other within a predetermined distance, the remote controller 200 receives the login information from the portable terminal.

Referring to (b) of FIG. 9A, when the remote controller 200 and the portable terminal 300 are brought within a predetermined distance, the portable terminal 300 transmits the login information to the remote controller 200 by NFC communication.

The remote controller 200 may transmit the received login information to at least one other remote controllable electronic device.

For instance, the remote controller 200 may transmit the received login information to the image display apparatus 100. If the image display apparatus 100 is in a power-off state, the image display apparatus 100 may be powered on If the image display apparatus 100 is placed in a stand-by state, the image display apparatus 100 may wake up.

In another embodiment of the present invention, a login to the image display apparatus may be performed by executing an application for the image display apparatus in the portable terminal, as illustrated in (c) of FIG. 9A.

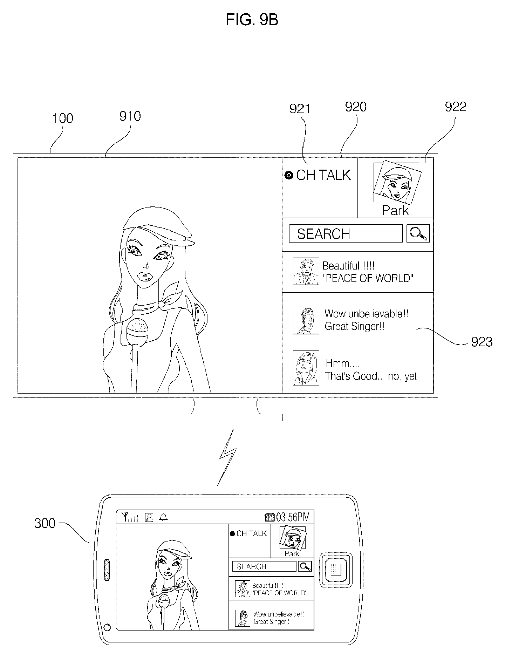

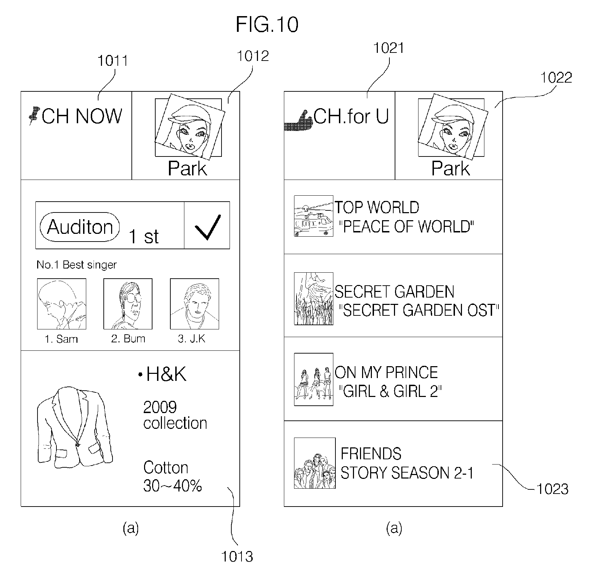

FIGS. 9B and 10 illustrate exemplary screens displayed based on a setting of a user account.

Referring to FIG. 9B, the screen configured based on the setting of the user account may include a broadcast image 910 that a user is viewing and a per-account image 920.

In an embodiment of the present invention, the image display apparatus may provide a user with his or her personalized screen related to an on-going program, a live image, etc. by analyzing personal information or favorite content and applications of the user, for example.

Various types of items may be included in the personalized screen. The user may select an intended type of screen for the personalized screen and the personalized screen may include UI screen information representing the configuration of a user-set screen to be displayed.

For example, the per-account image 920 may include an SNS corresponding to the logged-in account.

In this case, the per-account image 920 may include UI screen information 921, account information and user information 922, and personalized content 923.

The personalized content 923 may be based on the SNS.

The image display apparatus may log in to an SNS such as Twitter or Facebook by automatically transmitting SNS account information preserved in the portable terminal and then may display recent posts and a dialog window to allow the user to converse with other users viewing the same channel program.

Meanwhile, a per-account image may include content based on a use history of the logged-in account or content associated with an image of a program that the user is viewing as illustrated in FIG. 10.

Referring to (a) of FIG. 10, a broadcast image-related per-account image may include UI screen information 1011, account information and user information 1012, and personalized content 1013. The personalized content 1013 may be information about the on-going broadcast channel, content for interactive broadcasting, or a customized advertisement based on the use history of the user.

Referring to (b) of FIG. 10, a per-account image according to another embodiment of the present invention may include UI screen information 1021, account information and user information 1022, and personalized content 1023. The personalized content 1023 may be items that recommend favorite content or similar content to the user by analyzing the user's log data for the favorite content that the user has frequently used through the portable terminal and the image display apparatus.

The image display apparatus 100 may transmit information required to display the screen based on the setting of the user account to the portable terminal 300. That is, the image display apparatus 100 may transmit information and data for mirroring between the image display apparatus 100 and the portable terminal 300 to the portable terminal 300. The information required for displaying the screen based on the setting of the user account may be a file of content to be displayed or Uniform Resource Locator (URL), server, and play timing information with which to display the content.

Meanwhile, the image display apparatus 100 receives a login input for a second user account corresponding to a second portable terminal (S720). The login input may be made in the methods described before with reference to FIG. 9A.

That is, login information about the second user account is received from the remote controller in step S720. The remote controller may receive the login information about the second user account from a second portable terminal by NFC communication.

Alternatively, the image display apparatus 100 may receive the login information about the second user account directly from the second portable terminal.

Subsequently, the image display apparatus 100 logs in to the second user account based on the login information about the second user account (S730).

A plurality of users such as family members use an image display apparatus in many cases. Accordingly, when a plurality of users log in to the image display apparatus, the image display apparatus may display a common screen instead of their personalized screens in an embodiment of the present invention.

That is, the screen displayed on the display 180 is switched to a common screen based on the first and second user accounts (S740).

In this case, upon login of the plurality of users, the image display apparatus creates a common account(or an account for public use) and switches the on-going personalized screen displayed by a login from a single user to a common screen of a general service or a common service according to the common account.

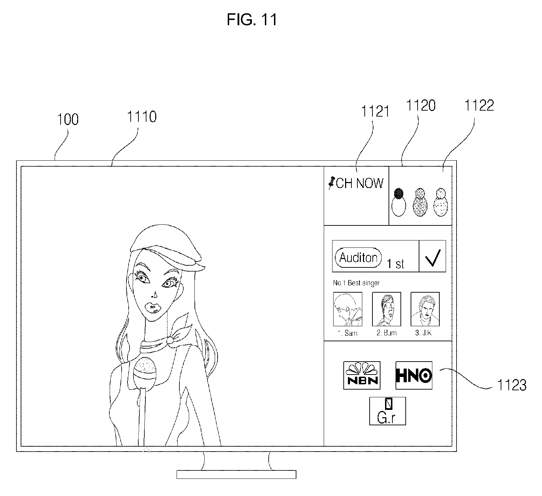

FIG. 11 illustrates an exemplary common screen that is displayed in case of login of a plurality of users.

Referring to FIG. 11, the common screen may include a broadcast image 1110 and a common account setting screen 1120 based on the common account.

The common account setting screen 1120 may include UI screen information 1121, common account information 1122, and common content 1123 of the common account.

The common content 1123 of the common account may not include content such as an SNS service requiring privacy protection for individual user accounts.

Meanwhile, the image display apparatus 100 may transmit information needed to display a screen based on the setting of the second user account to the second portable terminal. Even though the common account setting screen 1120 is being displayed on the display 180, the image display apparatus 100 may transmit information needed to display personalized screens to the first and second portable terminals, respectively.

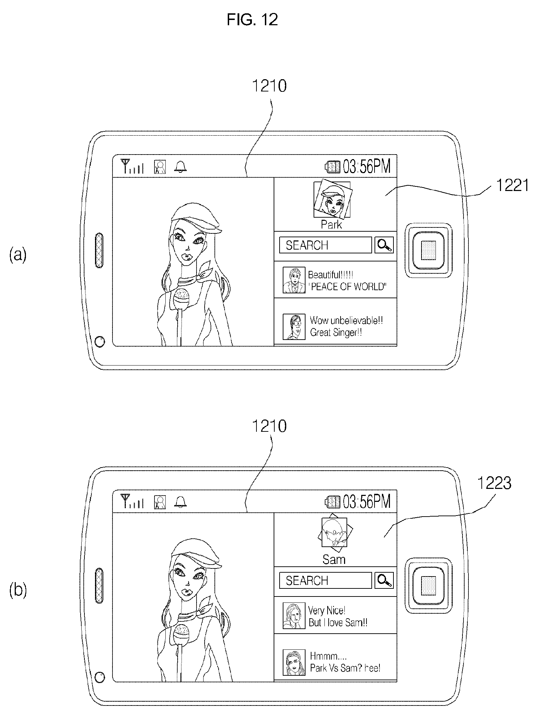

Referring to FIG. 12, the first and second portable terminals may display their per-account screens 1221 and 1223, respectively. In alternative embodiments, the first and second portable terminals may further display a broadcast image 1210.

That is, when a new user logs in to the image display apparatus 100, the existing personalized screen may be switched to a common-mode screen that does not contain personalized content, whereas the image display apparatus 100 transmits information and data needed to display respective personalized screens to the individual portable terminals.

Accordingly, a plurality of users can receive their personalized services, with their privacy protected.

In accordance with an embodiment of the present invention, operations of the image display apparatus may be controlled using a portable terminal. For instance, the portable terminal may switch one channel to another or adjust sound volume in the image display apparatus. Therefore, the image display apparatus may grant or revoke control authority to or from a specific portable terminal.

However, if a plurality of users log in to the image display apparatus and thus control the image display apparatus, contradictory commands may be issued or the users may feel irritated.

In this context, in the case where a login to the second user account is added to an existing login to the first user account, the authority granted to the first portable terminal to control the image display apparatus may be revoked. This implies that any specific portable terminal is not allowed to control the image display apparatus in the common mode.

Upon receipt of a logout input for the second user account in the common mode in which a plurality of users are logging in, the image display apparatus logs out the second portable terminal from the second user account. As a result, only the first user account is logged in in the common mode. Therefore, the image display apparatus switches the common screen to the personalized screen based on the setting of the first user account. That is, as the single logging-in user remains, his or her personalized screen is displayed.

In this case, the authority to control the image display apparatus may be granted to the first portable terminal.

On the other hand, upon receipt of a logout input for the first user account in the common mode in which the plurality of users are logging in, the image display apparatus logs out the first portable terminal from the first user account. As a result, only the second user account is logged in in the common mode. Therefore, the image display apparatus switches the common screen to the personalized screen based on the setting of the second user account.

Likewise, the authority to control the image display apparatus may be granted to the second portable terminal.

Referring to FIG. 8, a portable terminal transmits login information for a user account to the image display apparatus (S810).

Upon receipt of information needed to display a screen based on a setting of the user account from the image display apparatus (S820), the portable terminal displays the same screen based on the setting of the user account as displayed on the image display apparatus (S830).

As described before, after the login, the portable terminal may acquire authority to control the image display apparatus from the image display apparatus and thus may control the image display apparatus.

When another user logs in to the image display apparatus later, the portable terminal may receive a message indicating the login of another user from the image display apparatus.

Upon login to a plurality of user accounts, the image display apparatus may switch to a common screen and transmit information needed to display the common screen to the portable terminal.

The portable terminal may display a menu prompting the user to select the personalized screen or the common screen and display the selected screen.

That is, the user may select between the same screen as displayed on the image display apparatus and his or her own personalized screen.

The menu prompting the user to select the personalized screen or the common screen may be included in the message indicating the login of another user.

If the user makes no specific choice between the common screen and the personalized screen, the portable terminal may display the personalized screen. Considering the portable terminal is a personal device, the per-account screen may take priority over the common screen.

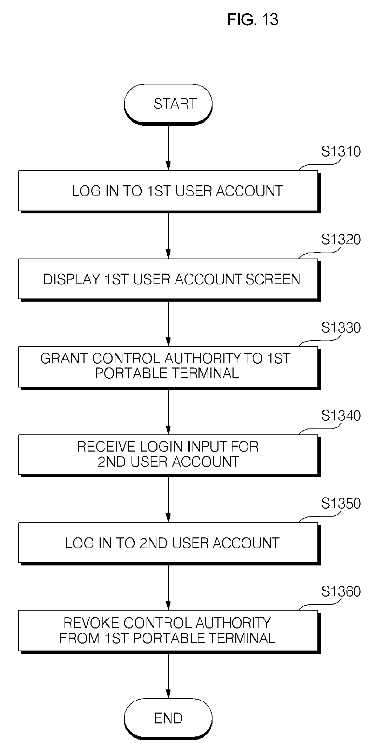

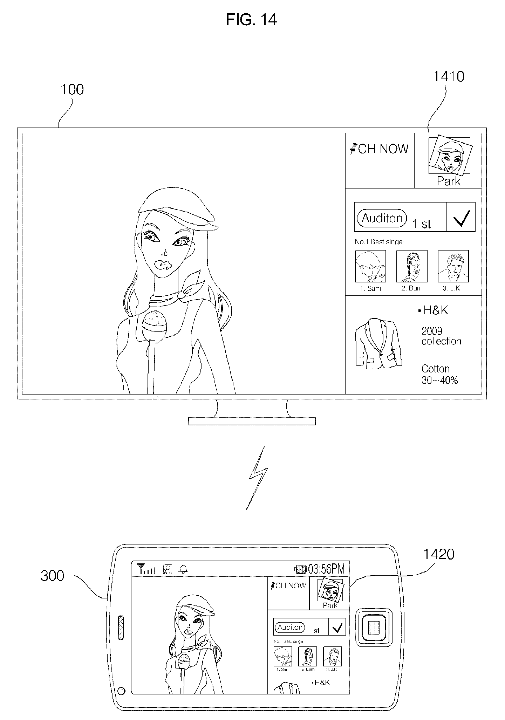

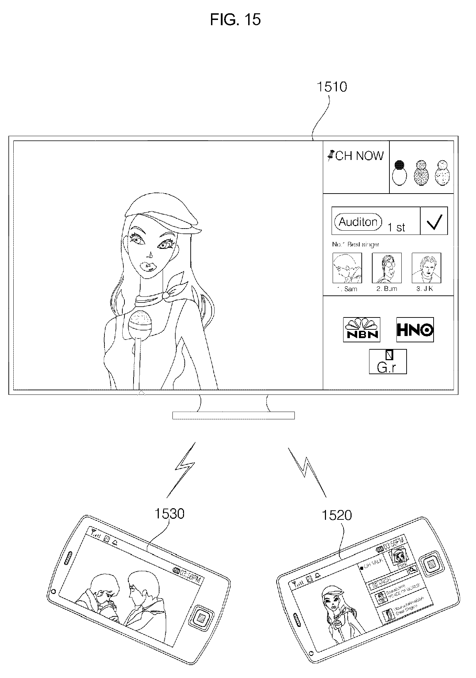

FIG. 13 is a flowchart illustrating a method for operating the image display apparatus according to another embodiment of the present invention and FIGS. 14 and 15 are views referred to for describing examples of the method for operating the image display apparatus illustrated in FIG. 13.

The same or similar description of the embodiment illustrated in FIGS. 7 to 12 is omitted or briefly given.

Referring to FIG. 13, the method for operating the image display apparatus according to the embodiment of the present invention includes logging in to a first user account corresponding to a first portable terminal (S1310) and displaying a screen 1410 based on a setting of the first user account on a display (S1320).

Referring to FIG. 14, the first portable terminal may also display a screen 1420 based on the screen 1410 displayed on the image display apparatus.

The image display apparatus grants authority to control the image display apparatus to the first portable terminal corresponding to the logged-in account (S1330).

Then the user can manipulate the image display apparatus using the first portable terminal. Thus when the user changes a channel or sound volume or manipulates an OSD menu on the display of the first portable terminal, the same change may occur to the image display apparatus.

Later, the image display apparatus receives a login input for a second user account corresponding to a second portable terminal (S1340) and thus logs in to the second user account (S1350).

If the login to the second user account is performed in addition to the logged-in first user account, which means that the common mode is placed, the image display apparatus revokes the control authority from the first portable terminal (S1360).

When the second user account is logged in, the image display apparatus may switch the on-going screen to a common screen based on the first and second user accounts on the display.

While displaying a common screen 1510, the image display apparatus may transmit information needed to display per-account screens to the first and second portable terminals, respectively. Then the first and second portable terminals may display a per-account screen 1520 or different content 1530 and 1540 based on the received information

Upon logout from the first user account, the image display apparatus may grant the control authority to the second portable terminal. Likewise, upon logout from the second user account, the image display apparatus may grant the control authority to the first portable terminal.

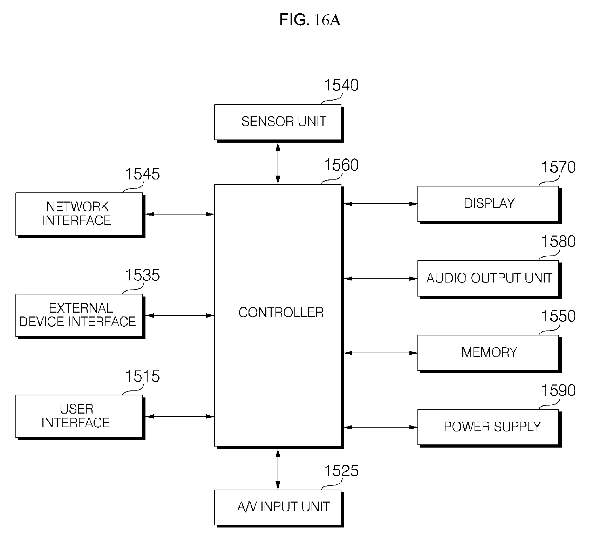

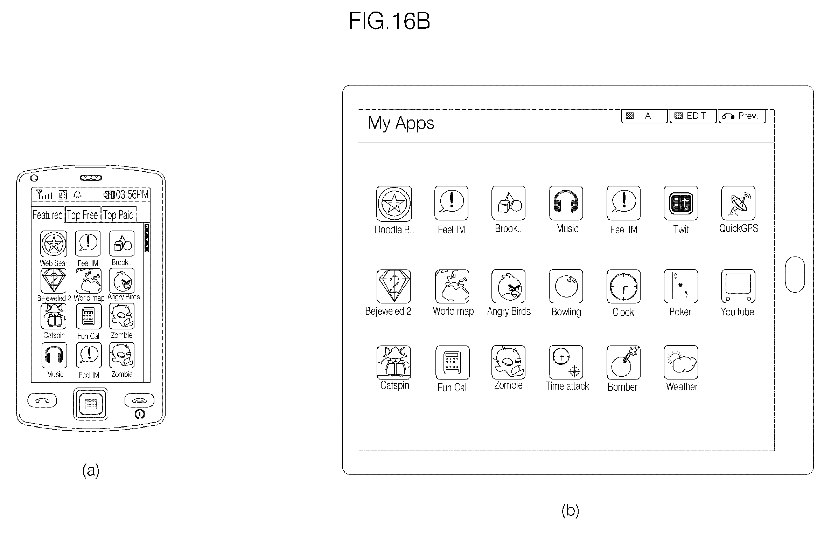

FIG. 16A is a block diagram of a portable terminal according to an embodiment of the present invention and FIG. 16B illustrates exemplary portable terminals.

Referring to FIG. 16A, a portable terminal 300 may include a user interface 1515, an A/V input unit 1525, a network interface 1545, an external device interface 1535, a sensor unit 1540, a memory 1550, a controller 1560, a display 1570, an audio output unit 1580, and a power supply 1590. Two or more components of the portable terminal 300 may be combined into a single component or a single component thereof may be separated into two or more components in alternative embodiments.

The portable terminal 300 according to the embodiment of the present invention is shown as a smart phone in FIG. 16(a) and as a tablet PC in FIG. 16(b).

The term "portable terminal" as used herein covers a broad range of terminals including a tablet computer, a portable phone, a smart phone, a laptop computer, a Personal Digital Assistant (PDA), a Portable Multimedia Player (PMP), a digital broadcasting terminal, a navigator, etc.

The portable terminal is capable of accessing the Internet and a computer by wireless or wired Internet and thus performing functions such as e-mail, Web browsing, banking, game playing. Obviously, the portable terminal also has voice call and video call functions over the Internet based on Voice over Internet Protocol (VoIP) and a mobile communication network

The user interface 1515 generates key input data that a user inputs to control the operation of the portable terminal 300. The user interface 1515 may include a keypad, a switch, a (resistive/capacitive) touch screen, etc. to receive a command or information through the user's push or touch manipulation. The user interface 1515 may also be configured into a jog wheel that is rotated for a key input, a finger mouse, etc. Or the user interface 1515 may be manipulated in a jog or joy stick fashion

The A/V input unit 1525 is used to receive an audio signal or a video signal and may include a camera and a microphone. The camera processes video frames of a still image or a video acquired from an image sensor in video call mode or camera mode. The processed video frames may be displayed on the display 1570.

The video frames processed by the camera may be stored in the memory 1550 or transmitted externally through the network interface 1545 or the external device interface 1535. Two or more cameras may be provided to the portable terminal 300 depending on the configuration specification of the portable terminal 300.

The microphone receives an external audio signal and processes the audio signal to electrical voice data in call mode, recording mode, or voice recognition mode.

The network interface 1545 interfaces between the portable terminal 300 and a wired/wireless network including the Internet.

The network interface 1545 may transmit data to or receive data from another user or another electronic device over a connected network or another network linked to the connected network. Especially, the network interface 1545 may transmit some content data stored in the portable terminal 300 to a user or electronic device selected from among other users or electronic devices pre-registered to the portable terminal 300.

The network interface 1545 may access a specific Web page through a connected network or another network linked to the connected network. That is, the network interface 1545 may transmit data to or receive data from a server by accessing a specific Web page through a network. Additionally, the network interface 1545 may receive content or data from a CP or an NP. Specifically, the network interface 1545 may receive content such as movies, advertisements, games, VoD files, and broadcast signals, and information related to the content from a CP or an NP. Also, the network interface 1545 may receive update information about firmware and update files of the firmware from the NP. The network interface 1545 may transmit data over the Internet or to the CP or the NP.

The network interface 1545 may selectively receive a desired application among open applications over a network.

The network interface 1545 may include a mobile communication module for connecting to a mobile communication network and conducting voice call and video call. The mobile communication module transmits and receives a radio signal to and from at least one of a Base Station (BS), an external terminal, or a server. The radio signal may include a voice call signal, a video call signal, or text/other various types of data involved in multimedia message transmission and reception

The portable terminal 300 may receive a broadcasting-related signal through a wired/wireless Internet and thus may further include a broadcasting receiver (not shown).

The broadcasting receiver may receive at least one of a broadcast signal or broadcasting-related information from the outside and may include a tuner, demodulator, a DEMUX, and a decoder for receiving and processing a signal.

The external device interface 1535 may serve as an interface between an external device and the portable terminal 300. For interfacing, the external device interface 1535 may include an A/V I/O unit (not shown) and/or a wireless communication module (not shown).

The external device interface 1535 may be connected to an external device such as a TV, a DVD player, a Blu-ray player, a game console, a camera, a camcorder, a computer (e.g., a laptop computer), a refrigerator, etc. wirelessly or by wire. Then, the external device interface 1535 externally receives video, audio, and/or data signals from the external device and transmits the received input signals to the controller 1560. In addition, the external device interface 1535 may output video, audio, and data signals processed by the controller 1560 to the external device. In order to receive or transmit audio, video and data signals from or to the external device, the external device interface 1535 includes the A/V I/O unit (not shown) and/or the wireless communication module (not shown).

The A/V I/O unit of the external device interface 1535 may include a USB port, a CVBS port, a Component port, an S-video (analog) port, a DVI port, a HDMI port, an RGB port, and a D-sub port.

The wireless communication module of the external device interface 1535 may perform short-range wireless communication with other electronic devices. For short-range wireless communication, the wireless communication module may use Near Field Communication (NFC), Bluetooth, RFID, IrDA, UWB, ZigBee, and DLNA.

Besides the above-described external devices, the external device interface 1535 may interface between the portable terminal 300 and all external devices connected to the portable terminal 300. The external devices include, for example, a wireless/wired headset, an external charger, a wireless/wired data port, a card socket such as a memory card, a Subscriber Identification Module (SIM) card, and a User Identify Module (UIM) card, an audio I/O port, a video I/O port, and an earphone. The external device interface 1535 may receive data or power from such an external device and provide the data or power to each component of the portable terminal 300. In addition, the external device interface 1535 may transmit data from the portable terminal 300 to an external device.

Meanwhile, the external device interface 1535 may receive applications or an application list from an adjacent external device and provide the applications or the application list to the controller 1560 or the memory 1550.

The controller 1560 may transmit a user command or a programmed control signal to another electronic device connected through the network interface 1545 or the external device interface 1535 or may execute a command carried in a control signal from an authorized electronic device. For example, the controller 1560 may control an image display apparatus, perform a scheduled operation using a PC connected to a home network, check items kept in a smart refrigerator, or receive messages or commands from smart phones of a user's family members.

The sensor unit 1540 senses the current state of the portable terminal 300, such as the position, movement, or user touch of the portable terminal 300 and generates a sensing signal to control the operation of the portable terminal 300 according to the sensed state.

The sensor unit 1540 may include a proximity sensor, a pressure sensor, and a motion sensor. The proximity sensor may detect an object approaching the portable terminal 300 or the existence or absence of an object in the vicinity of the portable terminal 300 without mechanical contact. The proximity sensor may sense a nearby object based on a change in an alternating magnetic field or static magnetic field or a change rate of capacitance. Two or more proximity sensors may be used depending on the configuration specification of the portable terminal 300.

The pressure sensor may determine whether pressure is applied to the portable terminal 300 and how strong the pressure is. The pressure sensor may be installed at a part of the portable terminal 300 requiring pressure detection according to the environment in which the portable terminal 300 is used. If the pressure sensor is installed in the display 1570, a touch input on the display 1570 may be distinguished from a pressure-touch input generated on the display 1570 with a stronger pressure than the touch input according to a signal output from the pressure sensor. The signal from the pressure sensor may also indicate the magnitude of pressure applied to the display 1570, when the pressure-touch input is made.

The motion sensor senses the position or motion of the portable terminal 300 using an acceleration sensor, a gyro sensor, etc. The acceleration sensor converts a variation in acceleration along a direction to an electrical signal. The gyro sensor measures an angular velocity and senses a rotated direction with respect to a reference direction The gyro sensor may sense information about an action of the portable terminal 300 along x, y and z axes. The acceleration sensor may sense information about the velocity of the portable terminal 300. In general, one or more acceleration sensors representing two or three axial directions are incorporated into a single package. There are some cases in which the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on an additional substrate which is mounted on a main substrate.

The memory 1550 may store programs, a platform, and applications required for processing and controlling in the controller 1560 or temporarily store processed video, audio, and/or data signals.

The portable terminal 300 may reproduce content stored in the memory 1550 (e.g. video files, still image files, music files, text files, application files, etc.) to the user.

In addition, the memory 1550 may temporarily store video, audio, and/or data signals received through the external device interface 1535 or the network interface 1545.

The memory 1550 may include, for example, at least one of a flash memory-type storage medium, a hard disk-type storage medium, a multimedia card micro-type storage medium, a card-type memory (e.g. an SD or XD memory), a RAM, or a ROM such as an EEPROM.

While the memory 1550 is shown in FIG. 16A as configured separately from the controller 1560, to which the present invention is not limited, the memory 1550 may be incorporated into the controller 1560, for example.

The controller 1560 may provide overall control to the portable terminal 300. For example, the controller 1560 may control the portable terminal 300 according to a user command received through the user interface 1515 or according to an internal program. Especially the controller 1560 may access a network and download an application or application list selected by the user to the portable terminal 300 over the network.

The controller 1560 may control output of a video or audio signal included in a received signal to the display 1570 or the audio output unit 1580.

In another example, the controller 1560 may control output of a video or audio signal received from an external device through the external device interface 1535 to the display 1570 or the audio output unit 1580 according to an external device video playback command received through the user interface 1515.

Meanwhile, the controller 1560 may control display of an image of the other party and an image of a user on the display 1570 in video call mode according to user settings and may control output of voice based on a voice signal received from the other party to the audio output unit 1580.

The controller 1560 may control reproduction of content. The content may be content stored in the portable terminal 300, received broadcast content, or external input content. The content may be at least one of a broadcast image, an external input image, an audio file, a still image, a connected Web page, or a text file.

The controller 1560 may determine from a touch input pattern whether the touch input corresponds to an input of text such as a character, digit, or symbol. The controller 1560 may identify a character corresponding to the trace of the touch input, referring to a database. The database may cover Korean, English, Chinese, Japanese, numerals, symbols, etc. and may be stored in the controller 1560 or the memory 1550.

The controller 1560 may control installation and execution of an application downloaded from an external network, along with various UIs. In addition, the controller 1560 may control display of an image related to the executed application on the display 1570 according to a user selection

A platform of the portable terminal 300 may have an OS-based software to implement the above-described operations in the embodiments of the present invention The platform may be programmed in the controller 1560 or a separately procured processor, or stored in the memory 1550.

A stack of an OS kernel, drivers, middleware, a framework, and applications may be built on a platform of the portable terminal 300 in the embodiments of the present invention.

The OS kernel may be implemented on various OSs including Unix (Linux) and Windows. The OS kernel is an open general-purpose OS kernel that can also be used in other electronic devices.

The display 1570 may convert a processed video signal and a processed data signal received from the controller 1560 or a video signal and a data signal received from the external device interface 1535 into RGB signals, thereby generating driving signals.

The display 1570 may be various types of displays such as a PDP, an LCD, an OLED display, a flexible display, and a 3D display.

The display 1570 may also be a touch screen that can be used not only as an output device but also as an input device.

The audio output unit 1580 outputs audio data received in call termination mode, call mode, recording mode, voice recognition mode, or broadcasting reception mode or stored audio data The audio output unit 1580 also outputs an audio signal related to a call incoming sound, a message reception sound, sound effects, etc. The audio output unit 1580 may include a speaker, a buzzer, etc.

The power supply 1590 supplies power to each component of the portable terminal 300.

The portable terminal 300 having the above-described structure illustrated in FIG. 16A may be configured so as to operate in a communication system in which data can be transmitted in frames or packets, such as a wireless/wired communication system and a satellite communication system.

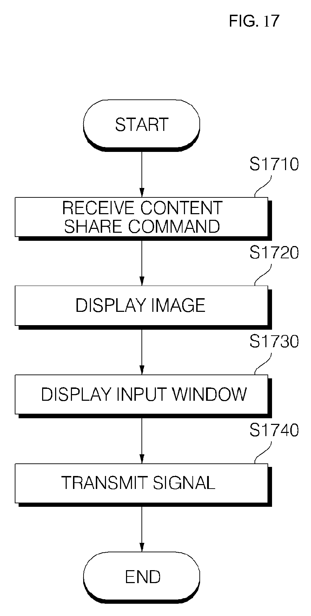

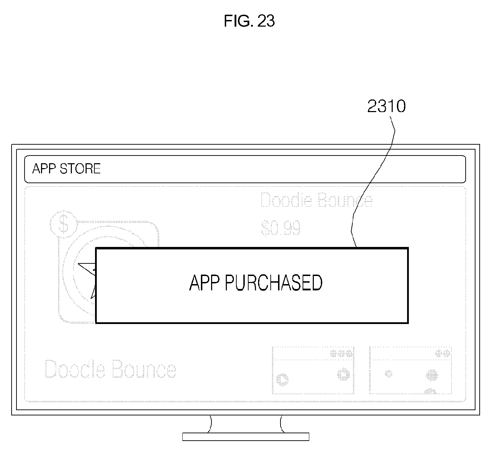

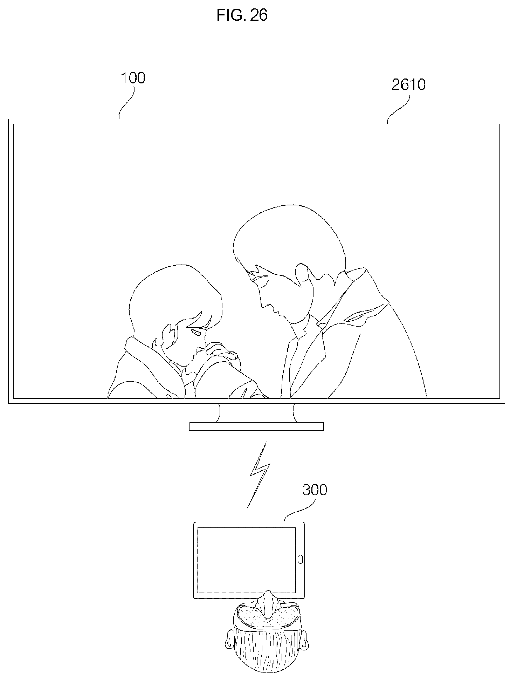

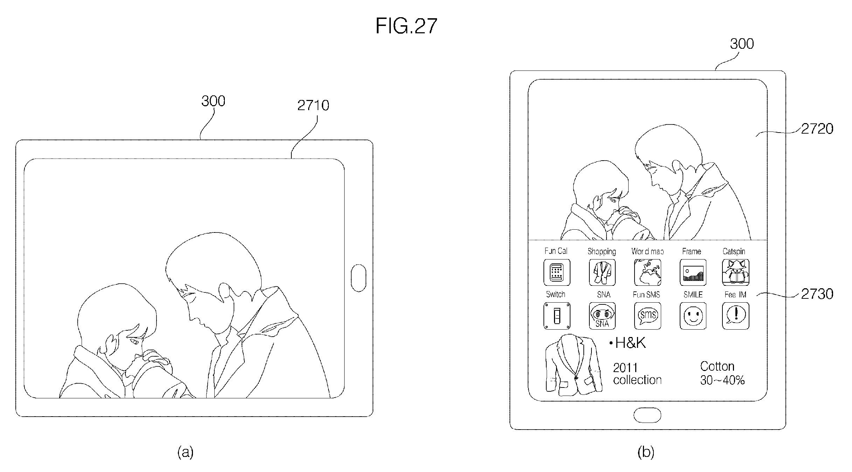

FIGS. 17 to 31 are views referred to for describing various examples of a method for operating the portable terminal and a method for operating the image display apparatus according to embodiments of the present invention

FIG. 17 is a flowchart illustrating a method for operating a portable terminal according to another embodiment of the present invention

Referring to FIG. 17, the portable terminal receives a content share command to share content displayed on the image display apparatus (S1710).

The content share command may be received in various manners.

For example, the content share command may be generated by selecting a share menu displayed on the display 1570 of the portable terminal 300 or by making a snatching gesture, that is, by drawing at least one surface of the portable terminal 300 toward a user.

The snatching gesture is advantageous in that the user can enter the content share command without being distracted from current content.

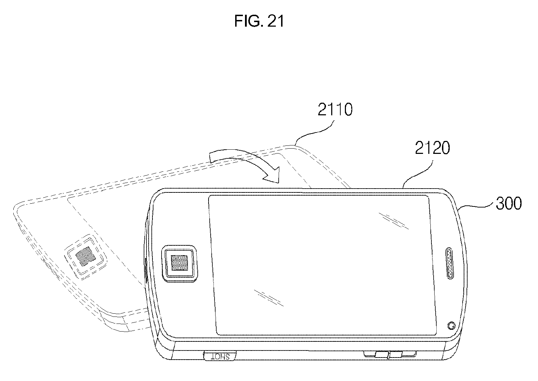

Referring to FIG. 21, one surface 2120 of the portable terminal 300 after a snatching gesture is nearer to the user than the same surface 2110 of the portable terminal 300 prior to the snatching gesture.

The method for operating a portable terminal according to the embodiment of the present invention may further include transmission of a content reproduction command to the image display apparatus. Specifically, to view content on a larger screen, content may be displayed on the display of the image display apparatus and when needed, on the portable terminal.

Upon receipt of the content share command, the portable terminal 300 displays an image based on the content (S 1720).

The image based on the content is an image displayed in a changed display state of the content or a part of a whole image of the content.

While not shown in FIG. 17, the method for operating a portable terminal may further include connecting the image display apparatus to a network and transmitting and receiving data for sharing content. The data for content sharing may be the content itself or information about the title of the content, a URL preserving the content, play timing information, and authentication information.

Meanwhile, the content displayed on the image display apparatus may include a plurality of items and the content-based image may be related to any of the plurality of items.

Especially, upon selection of one item of the content, the content-based image may correspond to the selected item.

For example, if the content is about an application store, upon selection of an application in the application store, an image related to the selected application may be displayed.

While the following description is given of an application purchase process, this is purely exemplary and thus should not be construed as limiting the present invention.

Subsequently, an input window corresponding to the displayed image is displayed (S1730).

In the example of the application store, an application purchase window, a payment information input window, or an identification information input window may be displayed, and payment information or the user's identification information may be entered in the input window.

After the user completes entering the information in the input window, the portable terminal transmits a signal based on the input information to the image display apparatus (S1740).

Since a portable terminal is a personal electronic device, it outperforms a common electronic device in terms of security and privacy protection. Accordingly, extensive research is being conducted on various payment and security schemes using a portable terminal and thus a portable terminal can be used for purchasing goods. Since the present invention is characterized by displaying various types of information in two devices, i.e. a portable terminal and an image display apparatus, the portable terminal can be used to enter information for purchase.

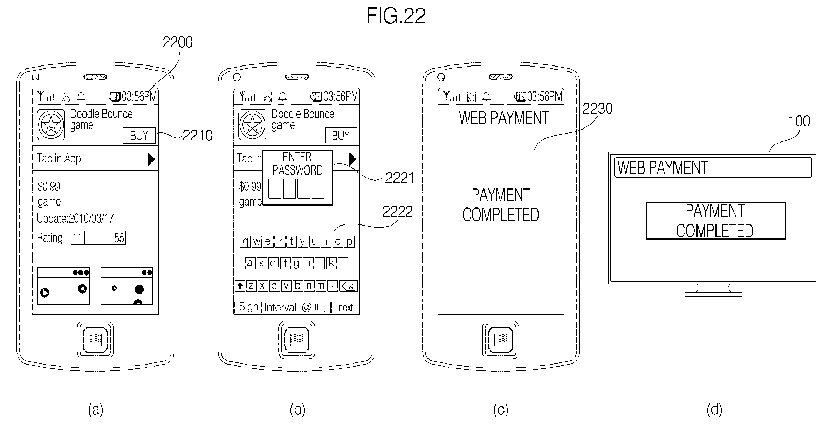

FIG. 22 illustrates an exemplary process for purchasing a TV application through a portable terminal.

Referring to FIG. 22, a purchase page 2200 displayed on the image display apparatus is fetched to the portable terminal by the afore-described snatching gesture. When the user selects a buy menu item 2210, the portable terminal displays an input window 2221 on the display so that the user may enter information required to purchase an application.

In this case, a tool that helps the user to input information, such as a screen keyboard 2222 may be displayed additionally. In general, purchase information is an alphanumeric combination. Compared to the image display apparatus with which it is difficult to enter alphanumeric information relative to a PC and a portable terminal, the portable terminal is easy to enter information

Subsequently, the portable terminal may display information 2230 in response to the user input, for example, a message indicating payment completion.

Meanwhile, the method for operating a portable terminal according to the embodiment of the present invention may further include connecting the portable terminal to a server. Thus, signals and data may be transmitted through the server. That is, signals and data may be transmitted and received to and from the image display apparatus connected over a network, directly or through the server.

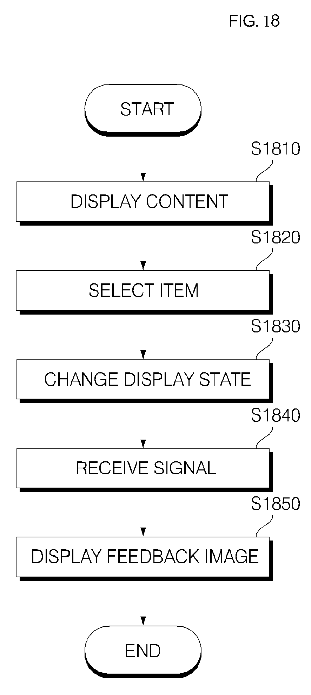

FIG. 18 is a flowchart illustrating a method for operating the image display apparatus according to another embodiment of the present invention.

Referring to FIG. 18, the image display apparatus displays an image including a plurality of items, i. e. content on the display 180 (S 1810).

A command to reproduce the content may be received through a local key of the remote controller or the image display apparatus or through a user touch or gesture made on the remote controller or the image display apparatus.

Or a step of receiving the content reproduction command from the portable terminal may further be performed. Then content corresponding to the content reproduction command may be displayed.

For instance, if a user selects a TV application store connection menu from among menu icons on the portable terminal, the image display apparatus may access a TV application store.

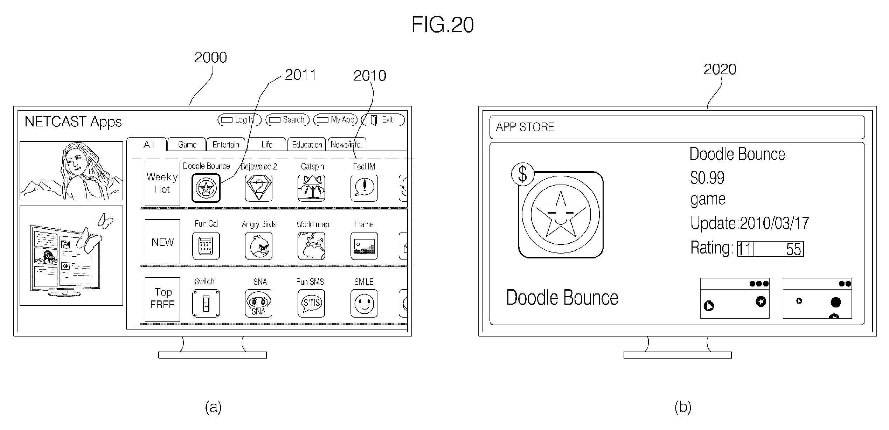

After connecting to the TV application store, the image display apparatus may display an application store screen 2000, as illustrated in (a) of FIG. 20.

Subsequently, at least one item 2011 is selected from among the plurality of items 2010 through one of various means such as the remote controller, the portable terminal, or a user's touch or gesture.

That is, an input to select at least one of the plurality of items may be received from various means such as the remote controller or the portable terminal.

Upon receipt of a selection input, the display state of the screen displayed on the display 180 is changed according to the selected item (S1830).

At least one of the size, color or transparency of the selected item may be changed in step S1830. Alternatively or additionally, the selected item may be highlighted as illustrated in FIG. 20.

Meanwhile, an image corresponding to the selected item may further be displayed in step S1830. For example, the image corresponding to the selected item may be displayed in a pop-up window.

Or the displayed whole screen may be switched to the image corresponding to the selected item in step S1830. For example, a purchase screen 2020 for the selected item may be displayed in full screen, substituting for the existing screen, as illustrated in (b) of FIG. 20.

An input signal related to the selected item is received from the portable terminal (S1840). The input signal may include at least one of an input for controlling the selected item, payment information, or user identification information.

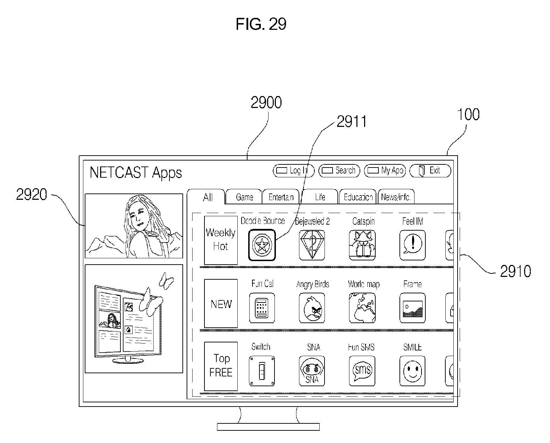

The portable terminal that transmits the input signal may be one of portable terminals of a plurality of logging-in users. That is, payment information may be received from a portable terminal corresponding to one of a plurality of user accounts. In this case, the purchased application and its purchase information may be installed, stored, and managed on a user account basis. Examples of payment in case of logins of a plurality of users will be described later with reference to FIGS. 29, 30 and 31.

Then, a feedback image corresponding to the input is displayed on the display 180 (S1850).

The feedback image may include information 2310 indicating the result of the input. The result information 2310 may be a confirmation of the user's input, information indicating the process of the user's input, or information indicating whether the user's input has been completely processed.

Meanwhile, the method for operating the image display apparatus according to the embodiment of the present invention may further include connecting the image display apparatus to a server. Thus, signals and data may be transmitted through the server. That is, signals and data may be transmitted and received to and from the portable terminal connected over a network, directly or through the server.

In accordance with an embodiment of the present invention, if the portable terminal and the image display apparatus use application store content, they operate in conjunction with each other in the order of the operations illustrated in FIGS. 20 to 23.

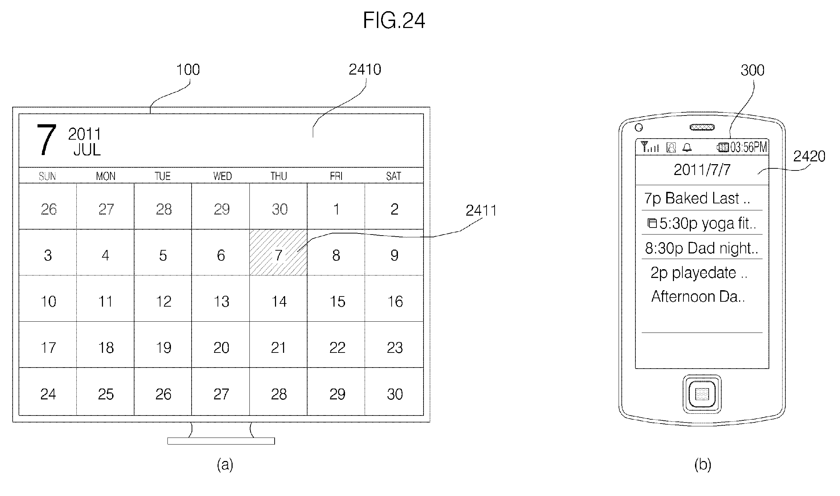

FIG. 24 illustrates an example of using calendar content through both the portable terminal and the image display apparatus.

Referring to FIG. 24, the image display apparatus 100 may display a large amount of information, for example, a schedule 2410 for one month, whereas the portable terminal 300 may be used as an input tool for reading or updating details 2420 of a selected item 2411 in the schedule 2410, that is, the detailed schedule for July 7.

Since information is displayed on a more suitable device between the portable terminal and the image display apparatus through interworking between them, user convenience can be increased.

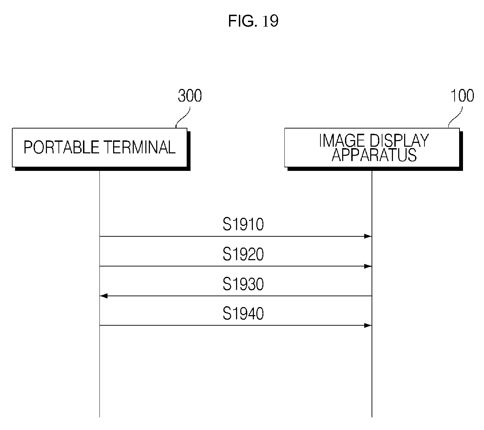

FIG. 19 is a diagram illustrating a signal flow between the portable terminal 300 and the image display apparatus 100, which will be described briefly to avoid redundancy with the description of the operations illustrated in FIGS. 17 and 18.

Referring to FIG. 19, the portable terminal 300 may transmit a control command, for example, a content reproduction command or an Internet connection command to the image display apparatus 100 (S1910).

The image display apparatus 100 displays specific content. When the user enters a content share command, while viewing the content on a large screen of the image display apparatus 100, the portable terminal 300 transmits the content share command to the image display apparatus (S1920).

The portable terminal 300 may receive information and data needed to share the content from the image display apparatus 100 (S1930). An image based on the content and, when need, an input window may be displayed.

Upon completion of a user's input, the portable terminal 300 transmits the user's input to the image display apparatus 100 (S1940).

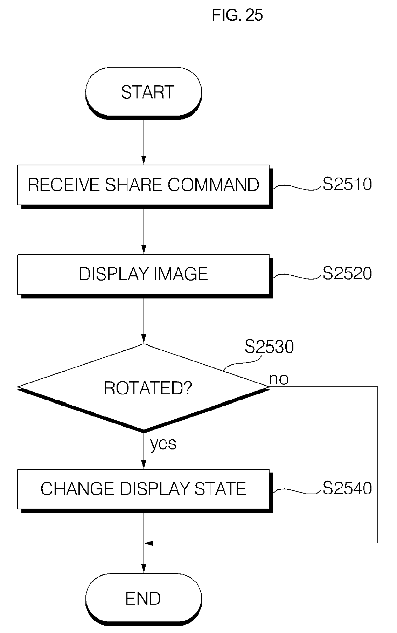

FIGS. 25 to 28 are views referred to for describing examples of the methods for operating the portable terminal and the image display apparatus according to embodiments of the present invention.

Referring to FIGS. 25 to 28, a command to share content 2610 displayed on the image display apparatus is received (S2510). The content share command may be generated by making a gesture of drawing at least one surface of the portable terminal toward the user.

The portable terminal displays an image 2710 based on the content (S2520). The content-based image may be an image having a different display state from the content, for example, in terms of size, resolution, etc. or may be a part of the whole image of the content.

Upon sensing rotation of the portable terminal (S2530), the display state of the image is changed (S2540).

If the portable terminal is rotated in such a manner that its screen gets larger along a vertical direction than along a horizontal direction, more information 2730 related to the content may be displayed.

In this case, the content-related information 2730 may be displayed in a pop-up form or after the display area of the content is scaled down.

That is, a contracted content-based image 2720 may be displayed in a specific area and the content-related information 2730 may be displayed in the remaining area

The content-related information 2730 may be real-time search, shopping, and recommendation items for the current content.

On the contrary, if the portable terminal is rotated in such a manner that the portable terminal is placed in landscape mode, that is, its screen size is larger along the horizontal direction than along the vertical direction, the content may be fullscreened in step S2540.

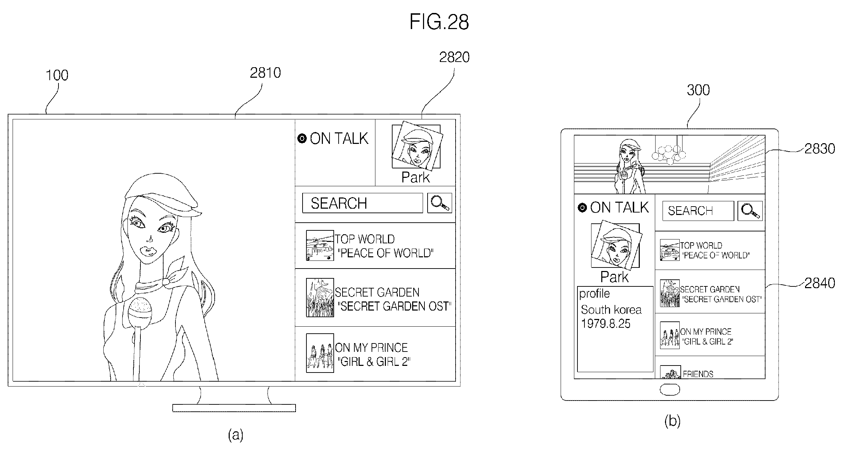

In the case where a plurality of content items such as a live broadcast image 2810 and an SNS application or widget 2820 are displayed, the portable terminal may be set in different screen modes according to the layouts of the content items as illustrated in FIG. 28.

For example, when the portable terminal is rotated to be longer vertically than horizontally, content items corresponding to a live broadcast image 2830 and an SNS application or widget 2840 may be displayed in a changed layout.

Upon sensing rotation of the portable terminal, an electronic device connected to a network and available content items may be displayed.

In accordance with the embodiment of the present invention, since content and information are shared between the portable terminal and the image display apparatus, the user can manage and use the content and information more conveniently and diversely.

FIGS. 29, 30 and 31 are views referred to for describing various examples of the methods for operating the portable terminal and the image display apparatus according to embodiments of the present invention. Specifically, examples of payment in case of logins of a plurality of users through their portable terminals are illustrated.

Referring to FIGS. 29, 30 and 31, when an application store is connected, an application store screen 2900 may be displayed on the image display apparatus 100 as illustrated in FIG. 29.

The application store screen 2900 may include an application area 2910 that displays a plurality of applications and category information and a broadcast image area 2920 that displays a broadcast image.

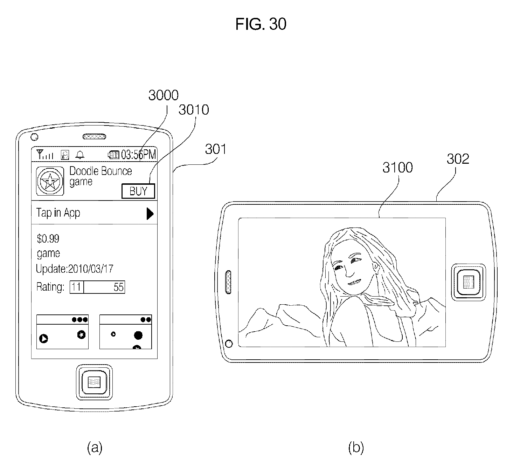

When a first user selects an application 2911 from among available applications using his or her portable terminal 301, a purchase page 3000 may be displayed on the portable terminal 301 as illustrated in (a) of FIG. 30.

That is, when a plurality of users log in to the image display apparatus, a purchase procedure is performed only with the portable terminal of a user that has selected a purchasable item, for privacy protection.

When the first user selects a buy menu item 3010, the portable terminal 301 may display an input window on which the user is allowed to input information needed to purchase the selected item, as described before with reference to FIG. 22.

In this case, the user may enter payment information easily through the portable terminal. Furthermore, the purchase process can be performed without displaying personal information such as account, credit card, and encryption information on the image display apparatus.

Meanwhile, a broadcast image 3100 may be displayed on a portable terminal 302 of a second user, as illustrated in (b) of FIG. 30. Therefore, a user that does not purchase an application may view the on-going broadcast image without being bothered during the purchase process.

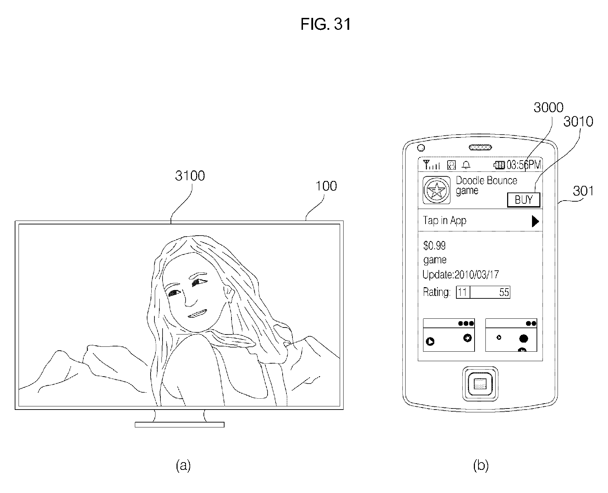

In alternative embodiments, the broadcast image 3100 may be fullscreened on the image display apparatus as illustrated in (a) of FIG. 31. Hence, the user that does not purchase an application may view the on-going broadcast image on the full screen of the image display apparatus 100 during the purchase process.

The user that has selected an application may purchase the application using the portable terminal, as illustrated in (b) of FIG. 31.

Meanwhile, the image display apparatus 100 may install, store, and manage content like the purchased application on an account basis.

As is apparent from the above description of the embodiments of the present invention, a login to an image display apparatus can be facilitated through a portable terminal and a remote controller and a screen personalized to the tastes or preferences of a user can be provided. Therefore, user convenience can be increased.

In addition, when a plurality of users log in to the image display apparatus, the image display apparatus is switched to a common mode, thereby protecting privacy for the users as well as providing personalized functions to the users.

The methods for operating the portable terminal and the image display apparatus according to the foregoing exemplary embodiments are not restricted to the exemplary embodiments set forth herein. Therefore, variations and combinations of the exemplary embodiments set forth herein may fall within the scope of the present invention.

The methods for operating the portable terminal and the image display apparatus according to the foregoing exemplary embodiments may be implemented as code that can be written on a computer-readable recording medium and thus read by a processor in the portable terminal and the image display apparatus. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Programs, code, and code segments to realize the embodiments herein can be construed by one of ordinary skill in the art.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method for operating an image display apparatus (100) including a display unit (180), the method comprising:
receiving, by the image display apparatus, login information of a first user account associated with a first portable terminal, while a content for viewing is currently displayed on the display unit (S810);
logging-in the first user account to the image display apparatus in response to the received login information of the first user account;
upon logging-in of the first user account, displaying on the display unit a first screen including the currently displayed content (910) and a per-account content (920) based on a setting of the first user account (S710) and, transmitting by the image display apparatus (S830), to the first portable terminal, information required to display the first screen on the first portable terminal;
while the first user account is logged-in, receiving by the image display apparatus, login information of a second user account associated with a second portable terminal (S720);
logging-in the second user account to the image display apparatus in response to the received login information of the second user account (S730);
upon logging-in of the second user account, switching on the display unit the displayed first screen to a common screen and, while the first and second user accounts are logged-in, transmitting by the image display apparatus to:
- the first portable terminal, information required to display the first screen on the first portable terminal,
- the second portable terminal, information required to display on the second portable terminal a second screen including the currently displayed content and a per-account content based on a setting of the second user account,
wherein the common screen is displayed on the display unit without the per-account content for the logged-in first and second user accounts (S740).

2. The method of claim 1, wherein the per-account content includes content related to the currently displayed content.

3. The method of claim 1, wherein in the receiving step, the login information of the first user account is received directly from the first portable terminal, or is received from a remote controller communicating with the first portable terminal.

4. The method of claim 3, wherein in the receiving step, the login information of the first user account is received using a short range wireless communication between the image display apparatus and the first portable terminal, or between the first portable and the remote controller communicating with the image display apparatus.

5. The method of claim 1, wherein the common screen includes the currently displayed content (910).

6. The method of claim 5, wherein the common screen further includes a common content (1123) based on a common account.

7. The method of claim 1, wherein the first additional content includes a Social Networking Service (SNS) corresponding to the logged-in first user account, or a content based on a use history of the logged-in first user account.

8. The method of claim 1, further comprising:
revoking an authority given to the first portable terminal to control the image display apparatus while allocating the authority to the second portable terminal, when the second user account is logged in (S1360).

9. An image display apparatus (100) comprising:
a display unit (180); and
a controller (170) configured to control the display unit and to:
receive login information of a first user account associated with a first portable terminal, while a content for viewing is currently displayed on the display unit;
log-in the first user account to the image display apparatus in response to the received login information of the first user account:
upon logging-in of the first user account, display on the display unit a first screen including the currently displayed content (910) and a per-account content (920) based on a setting of the first user account and transmit to the first portable terminal information required to display the first screen on the first portable terminal;
and, the controller being further configured to:
while the first user account is logged-in, receive login information of a second user account associated with a second portable terminal;
log-in the second user account to the image display apparatus in response to the received login information of the second user account; and
upon logging-in of the second user account, switch on the display unit the displayed first screen to a common screen and, while the first and second user accounts are logged-in, transmit to :
- the first portable terminal, information required to display the first screen on the first portable terminal,
- the second portable terminal, information required to display on the second portable terminal a second screen including the currently displayed content and a per-account content based on a setting of the second user account,
wherein the common screen is displayed on the display unit without the per-account content for the logged-in first and second user accounts (S740).

10. The image display apparatus of claim 9, wherein the common screen includes the currently displayed content.

11. The image display apparatus of claim 10, wherein the common screen further includes a common content (1123) based on a common account.

## Patentansprüche

1. Verfahren für den Betrieb einer Bildanzeigevorrichtung (100) mit einer Anzeigeeinheit (180), wobei das Verfahren aufweist:
Empfangen von Anmeldeinformationen eines ersten Benutzerkontos, das zu einem ersten tragbaren Endgerät gehört, durch die Bildanzeigevorrichtung, während aktuell ein Inhalt für die Betrachtung auf der Anzeigeeinheit angezeigt wird (S810);
Anmelden des ersten Benutzerkontos bei der Bildanzeigevorrichtung ansprechend auf die empfangenen Anmeldeinformationen des ersten Benutzerkontos;
nach dem Anmelden des ersten Benutzerkontos Anzeigen eines ersten Bildschirms einschließlich des aktuell angezeigten Inhalts (910) und von Inhalt (920) je Konto auf der Anzeigeeinheit basierend auf einer Festlegung des ersten Benutzerkontos (S710) und Senden von Informationen, die für die Anzeige des ersten Bildschirms auf dem ersten tragbaren Endgerät erforderlich sind, von der Bildanzeigevorrichtung (S830) an das erste tragbare Endgerät;
während das erste Benutzerkonto angemeldet ist, Empfangen von Anmeldeinformationen eines zweiten Benutzerkontos, das zu einem zweiten tragbaren Endgerät gehört, durch die Bildanzeigevorrichtung (S720);
Anmelden des zweiten Benutzerkontos bei der Bildanzeigevorrichtung ansprechend auf die empfangenen Anmeldeinformationen des zweiten Benutzerkontos (S730);
nach dem Anmelden des zweiten Benutzerkontos Einschalten des angezeigten ersten Bildschirms auf einen gemeinsamen Bildschirm auf der Anzeigeeinheit und während die ersten und zweiten Konten angemeldet sind, Senden durch die Bildanzeigevorrichtung:
- von Informationen, die erforderlich sind, um den ersten Bildschirm auf dem ersten tragbaren Endgerät anzuzeigen, an das erste tragbare Endgerät,
- Informationen, die erforderlich sind, um einen zweiten Bildschirm einschließlich des aktuell angezeigten Inhalts und eines Inhalts je Konto auf dem zweiten tragbaren Endgerät anzuzeigen, basierend auf einer Festlegung des zweiten Benutzerkontos an das zweite tragbare Endgerät,
wobei der gemeinsame Bildschirm auf der Anzeigeeinheit ohne den Inhalt je Konto für die angemeldeten ersten und zweiten Benutzerkonten angezeigt wird (S740).

2. Verfahren nach Anspruch 1, wobei der Inhalt je Konto Inhalt umfasst, der sich auf den aktuell angezeigten Inhalt bezieht.

3. Verfahren nach Anspruch 1, wobei die Anmeldeinformationen des ersten Benutzerkontos in dem Empfangsschritt direkt von dem ersten tragbaren Endgerät empfangen werden oder von einer Fernsteuerung empfangen werden, die mit dem ersten tragbaren Endgerät kommuniziert.

4. Verfahren nach Anspruch 3, wobei die Anmeldeinformationen des ersten Benutzerkontos in dem Empfangsschritt unter Verwendung einer Nahbereichskommunikation zwischen der Bildanzeigevorrichtung und dem ersten tragbaren Endgerät oder zwischen dem ersten tragbaren Endgerät und der Fernsteuerung, die mit der Bildanzeigevorrichtung kommuniziert, empfangen werden.

5. Verfahren nach Anspruch 1, wobei der gemeinsame Bildschirm den aktuell angezeigten Inhalt (910) umfasst.

6. Verfahren nach Anspruch 5, wobei der gemeinsame Bildschirm ferner einen gemeinsamen Inhalt (1123) auf Basis eines gemeinsamen Kontos umfasst.

7. Verfahren nach Anspruch 1, wobei der erste zusätzliche Inhalt einen sozialen Netzwerkdienst (SNS) umfasst, der dem angemeldeten ersten Benutzerkonto oder einem Inhalt auf Basis einer Nutzungshistorie des angemeldeten ersten Benutzerkontos entspricht.

8. Verfahren nach Anspruch 1, das ferner aufweist:
Widerrufen einer Berechtigung, die dem ersten tragbaren Endgerät gegeben wurde, um die Bildanzeigevorrichtung zu steuern, während die Berechnung dem zweiten tragbaren Endgerät zugewiesen wird, wenn das zweite Benutzerkonto angemeldet ist (S1360).

9. Bildanzeigevorrichtung (100), die aufweist:
eine Anzeigeeinheit (180); und
eine Steuerung (170), die konfiguriert ist, um die Anzeigeeinheit zu steuern und um:
Anmeldeinformationen eines ersten Benutzerkontos, das zu einem ersten tragbaren Endgerät gehört, zu empfangen, während aktuell ein Inhalt für die Betrachtung auf der Anzeigeeinheit angezeigt wird;
ansprechend auf die empfangenen Anmeldeinformationen des ersten Benutzerkontos das erste Benutzerkonto bei der Bildanzeigevorrichtung anzumelden;
nach dem Anmelden des ersten Benutzerkontos einen ersten Bildschirm einschließlich des aktuell angezeigten Inhalts (910) und von Inhalt (920) je Konto auf der Anzeigeeinheit basierend auf einer Festlegung des ersten Benutzerkontos anzuzeigen und Informationen, die für die Anzeige des ersten Bildschirms auf dem ersten tragbaren Endgerät erforderlich sind, an das erste tragbare Endgerät zu senden;
und wobei die Steuerung ferner konfiguriert ist, um:
während das erste Benutzerkonto angemeldet ist, Anmeldeinformationen eines zweiten Benutzerkontos, das zu einem zweiten tragbaren Endgerät gehört, zu empfangen;
ansprechend auf die empfangenen Anmeldeinformationen des zweiten Benutzerkontos das zweite Benutzerkonto bei der Bildanzeigevorrichtung anzumelden;
nach dem Anmelden des zweiten Benutzerkontos den angezeigten ersten Bildschirms auf einen gemeinsamen Bildschirm auf der Anzeigeeinheit einzuschalten, und während die ersten und zweiten Konten angemeldet sind, zu senden:
- Informationen, die erforderlich sind, um den ersten Bildschirm auf dem ersten tragbaren Endgerät anzuzeigen, an das erste tragbare Endgerät,
- Informationen, die erforderlich sind, um einen zweiten Bildschirm einschließlich des aktuell angezeigten Inhalts und eines Inhalts je Konto auf dem zweiten tragbaren Endgerät anzuzeigen, basierend auf einer Festlegung des zweiten Benutzerkontos an das zweite tragbare Endgerät,
wobei der gemeinsame Bildschirm auf der Anzeigeeinheit ohne den Inhalt je Konto für die angemeldeten ersten und zweiten Benutzerkonten angezeigt wird (S740).

10. Bildanzeigevorrichtung nach Anspruch 9, wobei der gemeinsame Bildschirm den aktuell angezeigten Inhalt umfasst.

11. Bildanzeigevorrichtung nach Anspruch 10, wobei der gemeinsame Bildschirm ferner einen gemeinsamen Inhalt (1123) auf der Basis eines gemeinsamen Kontos umfasst.

## Revendications

1. Procédé pour faire fonctionner un appareil d'affichage d'images (100) comprenant une unité d'affichage (180), le procédé comprenant :
la réception, par l'appareil d'affichage d'images, d'informations de connexion d'un premier compte utilisateur associé à un premier terminal portable, alors qu'un contenu à visionner est actuellement affiché sur l'unité d'affichage (S810) ;
la connexion du premier compte utilisateur à l'appareil d'affichage d'images en réponse aux informations de connexion reçues du premier compte utilisateur ;
lors de la connexion du premier compte utilisateur, l'affichage sur l'unité d'affichage d'un premier écran comprenant le contenu actuellement affiché (910) et un contenu par compte (920) sur la base d'un réglage du premier compte utilisateur (S710) et la transmission par l'appareil d'affichage d'images (S830), au premier terminal portable, d'informations nécessaires pour afficher le premier écran sur le premier terminal portable ;
alors que le premier compte utilisateur est connecté, la réception par l'appareil d'affichage d'images d'informations de connexion d'un deuxième compte utilisateur associé à un deuxième terminal portable (S720) ;
la connexion du deuxième compte utilisateur à l'appareil d'affichage d'images en réponse aux informations de connexion reçues du deuxième compte utilisateur (S730);
lors de la connexion du deuxième compte utilisateur, la commutation sur l'unité d'affichage du premier écran affiché à un écran commun et, alors que les premier et
deuxième comptes utilisateurs sont connectés, la transmission par l'appareil d'affichage d'images :
- au premier terminal portable, d'informations nécessaires pour afficher le premier écran sur le premier terminal portable ;
- au deuxième terminal portable, d'informations nécessaires pour afficher sur le deuxième terminal portable un deuxième écran comprenant le contenu actuellement affiché et un contenu par compte sur la base d'un réglage du deuxième compte utilisateur,
dans lequel l'écran commun est affiché sur l'unité d'affichage sans le contenu par compte pour les premier et deuxième comptes utilisateurs connectés (S740).

2. Procédé selon la revendication 1, dans lequel le contenu par compte comprend un contenu lié au contenu actuellement affiché.

3. Procédé selon la revendication 1, dans lequel, dans l'étape de réception, les informations de connexion du premier compte utilisateur sont reçues directement à partir du premier terminal portable ou sont reçues à partir d'une télécommande communiquant avec le premier terminal portable.

4. Procédé selon la revendication 3, dans lequel, dans l'étape de réception, les informations de connexion du premier compte utilisateur sont reçues en utilisant une communication sans fil à courte portée entre l'appareil d'affichage d'images et le premier terminal portable ou entre le premier portable et la télécommande communiquant avec l'appareil d'affichage d'images.

5. Procédé selon la revendication 1, dans lequel l'écran commun comprend le contenu actuellement affiché (910).

6. Procédé selon la revendication 5, dans lequel l'écran commun comprend en outre un contenu commun (1123) basé sur un compte commun.

7. Procédé selon la revendication 1, dans lequel le premier contenu additionnel comprend un service de réseau social (SNS) correspondant au premier compte utilisateur connecté ou un contenu basé sur un historique d'utilisation du premier compte utilisateur connecté.

8. Procédé selon la revendication 1, comprenant en outre :
la révocation d'une autorité donnée au premier terminal portable pour commander l'appareil d'affichage d'images tout en allouant l'autorité au deuxième terminal portable, quand le deuxième compte utilisateur est connecté (S1360).

9. Appareil d'affichage d'images (100) comprenant :
une unité d'affichage (180) ; et
un contrôleur (170) configuré pour commander l'unité d'affichage et pour :
recevoir des informations de connexion d'un premier compte utilisateur associé à un premier terminal portable, alors qu'un contenu à visionner est actuellement affiché sur l'unité d'affichage ;
connecter le premier compte utilisateur à l'appareil d'affichage d'images en réponse aux informations de connexion reçues du premier compte utilisateur ;
lors de la connexion du premier compte utilisateur, afficher sur l'unité d'affichage un premier écran comprenant le contenu actuellement affiché (910) et un contenu par compte (920) sur la base d'un réglage du premier compte utilisateur et transmettre au premier terminal portable des informations nécessaires pour afficher le premier écran sur le premier terminal portable ;
et le contrôleur étant configuré en outre pour :
alors que le premier compte utilisateur est connecté, recevoir des informations de connexion d'un deuxième compte utilisateur associé à un deuxième terminal portable ;
connecter le deuxième compte utilisateur à l'appareil d'affichage d'images en réponse aux informations de connexion reçues du deuxième compte utilisateur ; et
lors de la connexion du deuxième compte utilisateur, commuter sur l'unité d'affichage le premier écran affiché à un écran commun et, alors que les premier et deuxième comptes utilisateurs sont connectés, transmettre :
- au premier terminal portable, des informations nécessaires pour afficher le premier écran sur le premier terminal portable ;
- au deuxième terminal portable, des informations nécessaires pour afficher sur le deuxième terminal portable un deuxième écran comprenant le contenu actuellement affiché et un contenu par compte sur la base d'un réglage du deuxième compte utilisateur,
dans lequel l'écran commun est affiché sur l'unité d'affichage sans le contenu par compte pour les premier et deuxième comptes utilisateurs connectés (S740).

10. Appareil d'affichage d'images selon la revendication 9, dans lequel l'écran commun comprend le contenu actuellement affiché.

11. Appareil d'affichage d'images selon la revendication 10, dans lequel l'écran commun comprend en outre un contenu commun (1123) basé sur un compte commun.
